# EUROPEAN PATENT SPECIFICATION

(11) **EP 4 031 449 B1**
(45) Date of publication and mention of the grant of the patent: **21.10.2026**
(21) Application number: 20865241.2
(22) Date of filing: 16.09.2020
(51) Int. Cl.: B64D 17/62, G08G 5/00, B64U 70/30, A62C 3/02, B64D 17/72, B64U 70/83, B64D 17/80, G05D 1/00, B64C 39/02, G08G 5/21, G08G 5/26, G08G 5/34, G08G 5/54, G08G 5/56, G08G 5/57, G08G 5/58, G08G 5/80, G08G 5/90

(54) **DAMAGE MITIGATING FOR AN AERIAL VEHICLE HAVING A DEPLOYABLE PARACHUTE**
SCHADENSMINDERUNG FÜR EIN LUFTFAHRZEUG MIT ENTFALTBAREM FALLSCHIRM
ATTÉNUATION DES DÉGÂTS POUR UN VÉHICULE AÉRIEN AYANT UN PARACHUTE DÉPLOYABLE

(30) Priority: 20.09.2019 US 201916576882
(43) Date of publication of application: 27.07.2022
(73) Proprietor: Parazero Technologies Ltd., 5555626 Kiryat Ono (IL)
(72) Inventor: TSALIAH, Amir, 6425415 Tel Aviv (IL); KRAUSS, Ran, 6334221 Tel Aviv (IL); ATTIAS, Eden Abraham, 6200150 Tel Avv (IL)
(74) Representative: Giraldi, Elisa
(86) International application number: PCT/IL2020/051015
(87) International publication number: WO 2021/053670

(56) References cited:
- WO-A1-2015/059703
- CN-A- 106 741 969
- GB-A- 2 569 789
- KR-A- 20190 106 848
- KR-B1- 101 496 892
- US-A1- 2002 050 534
- US-A1- 2016 251 083
- US-A1- 2016 340 049
- US-A1- 2018 026 708
- US-A1- 2018 245 888
- US-A1- 2019 088 145
- US-B2- 10 059 459

## Description

### Field of the Invention

The present invention relates to the field of unmanned aerial vehicles (UAVs). More particularly, the invention relates to an aerial vehicle based damage avoidance system operable during onset of a critical failure event involving an aerial vehicle.

### Background of the Invention

The use of UAVs in low-altitude airspace, for example lower than 150 m, to perform various civilian missions such as the delivery of goods, agricultural monitoring and rescue operations has significantly increased in recent years. Although each UAV is directed along a unique flight path to avoid colliding with a neighboring UAV, no provisions are made to mitigate damage to neighboring UAVs and optionally to bystanders when the UAV is experiencing an unanticipated failure that causes the UAV to be suddenly diverted from its flight path.

The deployment of a parachute according to prior art methods involves several steps, including a triggering action initiated by an operator or a user which causes the parachute canopy to be longitudinally extracted from the compartment in which it is stored, and a passive inflation process characterized by an influx of ambient air into the canopy which causes the latter to expand until achieving the desired canopy diameter. The canopy expansion is generally resisted by structural tension of the canopy fabric and by inertia, taking on the order of at least 5 seconds until fully expanded. Such a delay corresponds to a significant drop of tens of meters. It would be desirable to provide apparatus by which a parachute could be rapidly deployed.

Some prior art apparatus is known for rapidly deploying a parachute, such as EP 336910, US 4,257,568, US 5,516,903, and CN 101767651. However, the time needed for fully deploying such prior art apparatus until the canopy is sufficiently inflated and expanded is excessive, precluding the use thereof for parachuting from a relatively low story of a building. Also, the prior art apparatus is either heavy, complicated to deploy or expensive, and is therefore not suitable for large scale use during a catastrophic event.

US 2019/088145 discloses an aircraft control system that enables the safe operation of multiple unmanned aerial vehicles in the same airspace, through the use of a decentralized air traffic management system. A safety system forces a parachute to be deployed based on data received from a sensor system.

US 2016/340049 discloses a method and system of flight termination for air vehicles by deploying a parachute when a major emergency is determined during an air vehicle's flight. GB 2569789 discloses a method of providing automated safe-fail operation for a UAV that includes obtaining real-time flight characteristic data indicative of air traffic control communications, airspace control or collision prediction, using an onboard flight controller to determine a number of safe-fail operations, and selecting and implementing one of the safe-fail operations in the event that the condition is triggered.

US 2018/026708 discloses a system and method for UAV network switchover and emergency that include communicating to an Air Traffic Control (ATC) system via a primary wireless network; receiving and storing emergency instructions from the ATC system; detecting communication disruption on the primary wireless network to the ATC system; responsive to the detecting, switching to a backup wireless network to reestablish communication to the ATC system; and, responsive to failing to reestablish communication to the ATC system via the backup wireless network, implementing the emergency instructions.

It is an object of the present invention to provide means for mitigating damage to neighboring UAVs when a given UAV in flight is caused to be diverted from its flight path after experiencing an unanticipated failure.

It is an additional object of the present invention to optionally provide means for mitigating damage to bystanders when a given UAV in flight is caused to be diverted from its flight path after experiencing an unanticipated failure.

Also disclosed is an apparatus and method for deploying a parachute or other fabrics at a significantly more rapid rate than what is achievable by prior art methods.

Also disclosed is an apparatus for rapidly and reliably deploying a parachute or other fabrics that is light, of simple construction, and inexpensive.

Other objects and advantages of the invention will become apparent as the description proceeds.

### Summary of the Invention

An aerial vehicle based damage avoidance system operable during onset of a critical failure event involving an aerial vehicle comprises a plurality of aerial vehicles, each flying along a unique flight path and comprising a plurality of flight dependent systems; and an unmanned aircraft traffic management system (UTM) station in data communication with said plurality of aerial vehicles and configured to allocate a low-altitude airspace to each of said plurality of aerial vehicles and to thereby grant authorization to fly along the unique flight path, wherein each of said aerial vehicles comprises safety apparatus for identifying a critical irreversible aerial vehicle failure that has a risk of being catastrophic and endangering nearby aerial vehicles and bystanders,
said safety apparatus being operational independently of said flight dependent systems one of which is liable to be malfunctioned due to the critical failure and comprising one or more on-board sensors including a location detector which are configured to detect flight related characteristics, a processing unit configured to process outputs of each of the on-board sensors and to detect the critical failure, a remote communication unit configured to transmit an instantaneous location identifier to said UTM station and to generate and transmit an aerial vehicle specific critical failure alarm signal to said UTM station following detection of the critical failure, a voltage sensor or a serial communication unit of said remote communication unit for determining voltage of a battery configured to power at least one lift generator of the aerial vehicle, a backup power unit that is independent of the battery and is employed when the battery voltage is less than a predetermined value, and an activation unit configured to activate a lift generator deactivation unit and the parachute deployment apparatus following detection of the critical failure, to initiate a descent operation along a descent path following termination of flight of the failed aerial vehicle and deployment of its parachute,
wherein the remote communication unit of said safety apparatus has wireless communication equipment to establish a data link with said UTM station whereby an encrypted signal provided with an identifier of the failed aerial vehicle (150d) is generated and transmitted to said UTM station,
wherein said UTM station is configured to transmit a warning signal to neighboring aerial vehicles that are predicted to be in a vicinity of the descent path of the failed aerial vehicle which is indicative that each of said neighboring aerial vehicles is to urgently change its flight path to avoid collision with the failed aerial vehicle.

In one aspect, the UTM station is configured to simultaneously transmit an update signal to all neighboring aerial vehicles at lower altitudes that are predicted to cross, or to be in a vicinity of, the descent path of the failed aerial vehicle.

In one aspect, the UTM station is additionally configured to alert bystanders as to an approach of the failed aerial vehicle.

In one aspect, the UTM station is also in data communication with a local cellular base station that is in communication range of the descent path of the failed aerial vehicle, and is thereby configured to determine which one or more mobile phones held by corresponding users are located in the vicinity of the descent path of the failed aerial vehicle and to transmit an alert signal to the one or more mobiles phones over a cellular network to allow the corresponding users to find immediate shelter.

In one aspect, the UTM station is also in data communication with a receiver of an on-ground siren, so that a warning sound will be immediately emitted thereby, to indicate to bystanders located in the vicinity of the descent path of the failed aerial vehicle that they must immediately significantly change their location or seek shelter.

In one aspect, the failed aerial vehicle is configured to alert bystanders as to an approach of the failed aerial vehicle.

In one aspect, the processing unit is additionally configured to additionally process the outputs of each of the on-board sensors, to detect a flight abnormality in the aerial vehicle in which the processing unit is mounted, and to initiate generation of another aerial vehicle specific updated flight path that forces the aerial vehicle to fly to a specified ground station and to undergo a repair or maintenance operation, a flight abnormality being a failure of a lower degree than the critical failure.

In one aspect, the failed aerial vehicle is an unmanned fixed-wing aircraft which is configured to glide following deactivation of each lift generator by the lift generator deactivation unit.

In one aspect, one of the on-board sensors is an accelerometer and a parachute deploying operation is automatically initiable following detection of a failed aerial vehicle acceleration that is greater than a predetermined value which is indicative of commencement of a free fall rather than of a gliding operation.

In one aspect, the activation unit further comprises a smart landing mechanism configured to perform emergency landing under guidance of a smart landing controller), wherein the smart landing controller is operable to command deployment of an airbag for reducing impact with an existing surface during an emergency landing procedure; or the smart landing mechanism comprises a downwardly facing collision avoidance system, and the processing unit is operable in conjunction with the downwardly facing collision avoidance system to calculate a required direction of downward travel in order to avoid a detected obstacle; or the smart landing mechanism comprises at least one LiDAR sensor for detecting obstacles.

In one aspect, the critical failure is selected from the group consisting of a predetermined drop in voltage of the battery configured to power the at least one lift generator of the aerial vehicle and a loss in flight dependent communication.

In one aspect, each of the aerial vehicles (150a-d) additionally comprises an aerial vehicle body configured with the at least one lift generator (289); the parachute deployment apparatus (10, 226) interactable with an undeployed parachute (20) which is retained in a chamber (17, 122) attached to said aerial vehicle body; and the lift generator deactivation unit (29, 221).

In one aspect, the parachute deployment apparatus (10, 226) comprises a manifold (3, 33) positioned within an interior of, and fixed to, the chamber (17, 122), with said manifold is releasably coupled a single vessel (47, 87) within which pressurized gas (G) is generated; a gas generator (49, 81) which cooperates with said vessel; a plurality of hollow tubes (8) which extend obliquely and upwardly from, and are in fluid communication with, said manifold; and
a plurality of projectiles (13), each of which formed with a rod (11) that is receivable in a corresponding one of said tubes and to each of which is connected a cord that is also connected to a corresponding portion of the undeployed parachute (20),
wherein the pressurized gas which is generated upon triggering of said gas generator is flowable through each of said tubes to propel said plurality of projectiles in different directions and to cause the parachute to become deployed, wherein the parachute deploying apparatus is configured to cause the parachute to achieve a desired canopy diameter simultaneously with ejection of the parachute from the chamber.

As referred to herein, directional terms such as "bottom", "top", and "upper" are described with respect to an orientation of the apparatus whereby the tubes extend upwardly from the manifold; however, the invention is also operable when the manifold is disposed at any other desired orientation.

### Brief Description of the Drawings

In the drawings:
- Fig. 1 is a perspective cross sectional view of a portion of parachute deploying apparatus, according to one embodiment of the present invention;
- Fig. 2 is an exploded, perspective view of the parachute deploying apparatus of Fig. 1;
- Fig. 3 is a vertical cross sectional view of a portion of the parachute deploying apparatus of Fig. 1, showing vessel comprising a gas generator coupled thereith;;
- Fig. 4 is a schematic illustration of a parachute deploying event involving the vessel of Fig. 3;
- Fig. 5 is a method for deploying a parachute, according to one embodiment of the invention;
- Fig. 6 is a block diagram of safety apparatus including an undeployed parachute assembly and the apparatus of Fig. 1;
- Fig. 7A is a schematic illustration of a parachute deploying event involving the safety apparatus of Fig. 6;
- Fig. 7B is a schematic illustration of an on-board failure detection unit;
- Fig. 8 is a perspective view of parachute deploying apparatus, according to another embodiment of the invention;
- Fig. 9 is a schematic, perspective view of the apparatus of Fig. 8 when the spring housing is removed, showing a vertically displaceable hammer for initiating a gas generation event;
- Fig. 10 is a side view of the apparatus of Fig. 8 when the hammer and manifold tubes are removed, showing the striking pin in a vertically displaced position;
- Fig. 11 is a perspective view from the top of the apparatus of Fig. 8 when the manifold and spring housing are removed, showing the hammer in a restrained position;
- Fig. 12 is a perspective view of the apparatus of Fig. 8 when the manifold is removed, showing a disengaging unit for initiating rotation of a rotatable element;
- Fig. 13 is a perspective view of a chamber within which the apparatus of Fig. 8 is positioned and an undeployed parachute canopy is stored;
- Fig. 14 is a schematic illustration of the operation of a UAV during different modes;
- Fig. 15 is a schematic illustration of a UAV-based damage avoidance system;
- Fig. 16 is a schematic illustration of components of safety apparatus usable in conjunction with the system of Fig. 15;
- Fig. 17 is a schematic illustration of three UAV-specific different-altitude flight paths generated by an UTM station;
- Fig. 18 is a schematic illustration of the means for avoiding a collision between a UAV flying along one of the different-altitude flight paths of Fig. 17 and a failed UAV;
- Fig. 19 is a cross sectional view of the chamber of Fig. 13, showing a fabric in a folded undeployed condition retained therewithin and attached to projectiles while each of the hollow tubes within each a corresponding projectile rod is receivable is removed;
- Fig. 20 is a perspective view of another embodiment of safety apparatus;
- Fig. 21 is a perspective view of a UAV, to a platform of which is secured the safety apparatus of Fig. 20;
- Fig. 22 is a flow chart of a damage mitigating operation;
- Fig. 23 is a schematic illustration of a damage mitigating operation by which an unwanted UAV is intercepted;
- Fig. 24 is an illustration of a damage mitigating operation by which a burning fire is suppressed;
- Fig. 25 is an illustration of the positioning of a fire suppressing fabric following the damage mitigating operation of Fig. 24;
- Fig. 26 is a perspective view of an indoor structure within which a plurality of safety apparatus units are mounted to facilitate a fire suppressing operation;
- Fig. 27 is a perspective view of a fire truck. at the end of a ladder of which is mounted safety apparatus used for fire suppression; and
- Fig. 28 is a schematic illustration of a fire suppressing operation with the use of hand-held damage mitigating apparatus.

### Detailed Description of the Invention

The present invention provides novel safety apparatus for an aerial vehicle, whether a manned aerial vehicle or an unmanned aerial vehicle (UAV), which mitigates damage to neighboring aerial vehicles and optionally to bystanders when the given aerial vehicle is experiencing an unanticipated failure. Although the following description relates to a UAV, it will be appreciated that the invention is likewise applicable to a manned aerial vehicle mutatis mutandis.

The safety apparatus comprises a sensor-based, on-board failure detection unit that is capable of identifying a critical UAV failure and various devices, such as parachute deployment apparatus and communication equipment for transmitting distress or alarm signals, which are automatically activated in response to identification of the critical failure. The safety apparatus is operational independently of the conventional flight dependent systems for the UAV, one or more of which may be malfunctioned due to the critical failure.

The parachute deployment apparatus comprises propellable projectiles for rapidly deploying a parachute within a time period significantly less than a second, and even as less as 0.3 sec, to ensure a life saving parachute deployment operation when located at a relatively low altitude such as 20 m above ground level.

The safety apparatus is usable in conjunction with various types of UAV, such as a fixed-wing aircraft for carrying a relatively heavy payload while lift is generated by the forward airspeed provided by a propeller driven by an electric motor, and rotorcraft which generates lift by a set of rotors, including multirotor aircraft for example of four, six or eight rotors by which aircraft motion is controlled by varying the relative speed of each rotor, a helicopter comprising variable pitch rotors, and a gyrocopter that uses an unpowered rotor in free autorotation to develop lift while forward thrust is provided by an engine-driven propeller. Each of these rotors and propellers may be referred to as a "lift generator", and the motor or engine configured to drive the lift generator may be referred to as "drive means".

In other embodiments, the safety apparatus is secured to a fixed or movable platform to mitigate damage to property or to nearby humans.

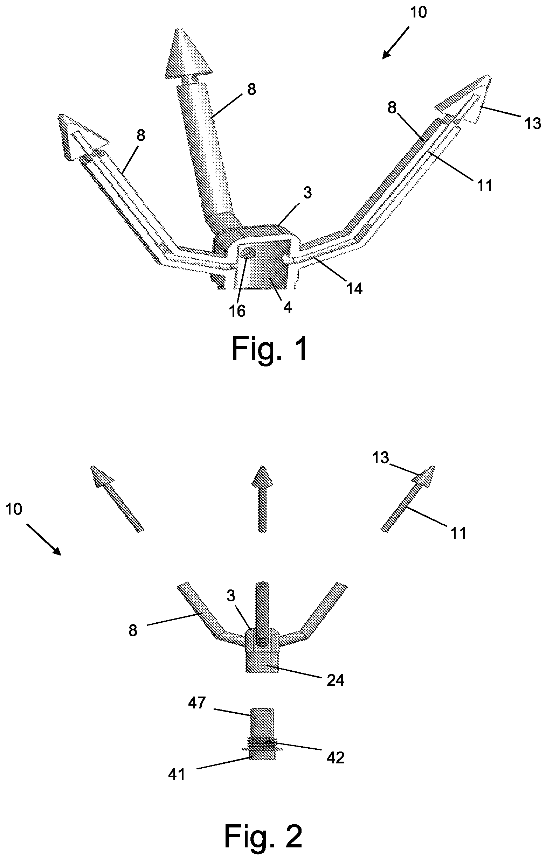

Fig. 1 illustrates apparatus 10, according to one embodiment of the present invention. Apparatus 10 comprises a substantially vertically disposed manifold 3 from which obliquely and upwardly extend a plurality of hollow tubes 8, e.g. three or four, in communication with the interior 4 of manifold 3 via a corresponding aperture 16 formed in the inner surface of the manifold. A rod 11 terminating with a larger surface projectile 13, e.g. with an arrow-shaped or tear-shaped head, is inserted into a corresponding tube 8. A draw cord is attached between each projectile 13 and a corresponding peripheral portion of the parachute canopy. These draw cords are in addition to the suspension lines that connect the canopy to the object to be parachuted, as well known to those skilled in the art.

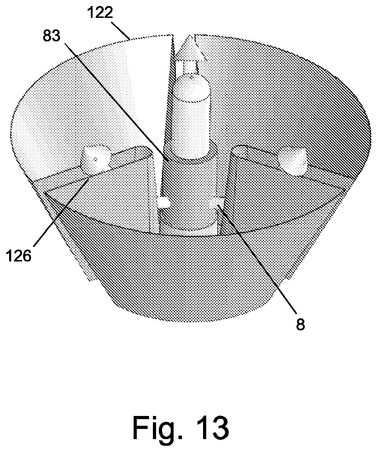

To prevent tearing, the canopy may be made of reinforced netting, for example Nylon 66 ripstop fabric. The undeployed parachute canopy is folded on top of manifold 3, and is retained in a chamber illustrated in Fig.13.

Manifold 3 may have a rectangular vertical cross section as shown, or may be configured in other ways as well.

Tubes 8 are all oriented at the same angle, e.g. 30 degrees relative to a vertical plane, to ensure uniform opening of the parachute. An intermediate tube 14 of shorter length and oriented at a larger angle than the rod receiving tubes 8 may extend from manifold 3 to a corresponding tube 8.

As shown in the exploded version of apparatus 10 in Fig. 2, a single, small sized pressure vessel 47 constituting a micro gas generator (MGG) is threadedly engageable, by external threading 42 formed in a bottom region of cylinder 41 which defines the vessel, with internal threading formed within cylinder 24 integral with, and extending downwardly from, manifold 3. Projectile 13 is shown to be integrally formed with a corresponding rod 11. All components of apparatus 10 that are exposed to the generated gas, including manifold 3, tubes 8, rods 11 and projectiles 13 are made of heat resistant material. By employing a single MGG that efficiently deploys a parachute, the weight and therefore the cost of the apparatus are significantly reduced with respect to the prior art.

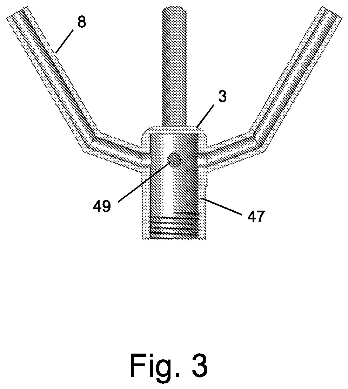

As shown in Fig. 3, an aperture 49 is formed in an upper region of vessel 47, e.g. in its circumferential wall, through which the generated gas is dischargeable into the interior of manifold 3, when the vessel is fully received within the interior of the manifold, and then through the interior of each tube 8, in order to cause the projectiles to be propelled a predetermined distance.

Alternatively, pressure vessel 47 may be positioned on top of the manifold and the aperture through which the generated gas is dischargeable may be formed in a lower region of the vessel.

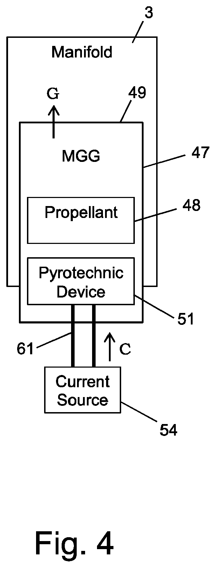

Referring now to Fig. 4, vessel 47 contains a solid propellant 48 consisting of materials that normally do not chemically react with each other and a pyrotechnic device 51 for initiating a reaction with propellant 48.

The vessel 47 is of sufficiently small dimensions, e.g. having a diameter of 2 cm and a length of 7 cm, in order to be compactly retained in the manifold cylinder when not in use, yet is highly efficient in terms of its gas generating capability. A vessel 47 is replaceable upon conclusion of a parachute deployment operation.

Pyrotechnic device 51 may be activated by an electrical current source 54 for heating a conductor of the device above the ignition temperature of a combustible material in contact therewith. Ignition of the combustible material initiates the MGG, causing a rapid chemical reaction involving propellant 48 that generates a large volume of pressurized gas G, e.g. nitrogen, within the manifold interior. The materials of propellant 48 and the current and voltage supplied by electrical current source 54 may be selected so as cause a highly exothermic reaction.

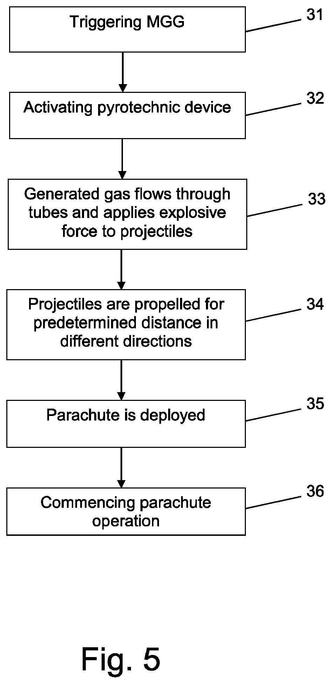

In one implementation as illustrated in Fig. 5, a user desiring to deploy a parachute according to the teachings of the present invention triggers the MGG in step 31 by electrical or mechanical means well known to those skilled in the art, which need not be described for purposes of brevity. As a result of the triggering operation, the pyrotechnic device becomes activated in step 32, causing the constituent components of the propellant to react and to generate energy intensive gas. The generated gas simultaneously flows through each tube extending from the manifold in step 33, applying an explosive force onto a corresponding projectile. The explosive force is converted into momentum, and each projectile is therefore propelled in a different direction for a predetermined distance in step 34. This distance, which is generally the sum of the length of the draw cord and the canopy radius, is reliably achieved by providing a sufficient dose of combustible material and a sufficient amount of activation current, to cause the parachute to be deployed in step 35 by being expanded to the desired canopy diameter.

After being deployed, ambient air is received in the interior of the parachute, causing the latter to be retained in a buoyancy generating inflated condition. While the canopy is fully expanded, the projectiles remain attached thereto by a corresponding draw cord after having transferring their kinetic energy to the canopy to urge the latter to an expanded condition. The weight of each projectile, e.g. 23 gm, is negligible with respect to the buoyancy force generated by the parachute, and therefore will not significantly impact the buoyancy of the parachute. A parachuting operation is then commenced in step 36.

In one embodiment, the projectile head is sealed within the inclined tube. In this fashion, the gas pressure within the tube can be increased, to allow the projectile to be propelled a further distance.

It will be appreciated that the various components that are exposed to the generated gas need not be made of heat resistant material when other types of gas such as carbon dioxide or nitrogen are employed.

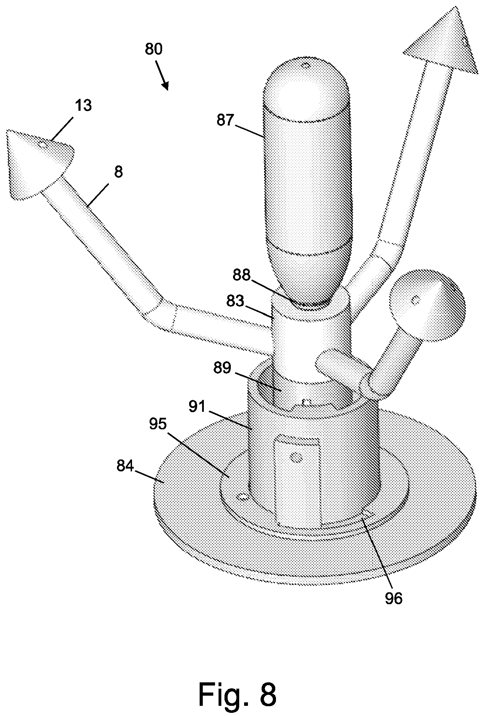

Figs. 8-13 illustrate another embodiment of the invention whereby the pressurized gas is generated by means of a spring loaded puncturing mechanism for generating pressurized gas, e.g. carbon dioxide, on demand upon puncturing a vessel containing a compressed or liquid gas.

Fig. 8 illustrates an assembled, ready to trigger parachute deploying apparatus 80, which comprises manifold 83 having three inclined tubes 8 into each of which a corresponding arrow-headed projectile 13 is inserted, compressed gas vessel 87 releasably engaged with the top of manifold 83, hollow spring housing 89 threadedly engageable with manifold 83 and in which is housed a spring and hammer for driving the puncturing mechanism, an outer tubular rotatable element 91 for encircling spring housing 89 and for selectively releasing a vertically displaceable hammer, and a bottom circular plate 95 positioned above larger circular plate 84 and below rotatable element 91 which is formed with a groove 96 for limiting the angular displacement of element 91. At the mouth 88 of vessel 87 is formed a pierceable metallic diaphragm, generally near the threading of the vessel.

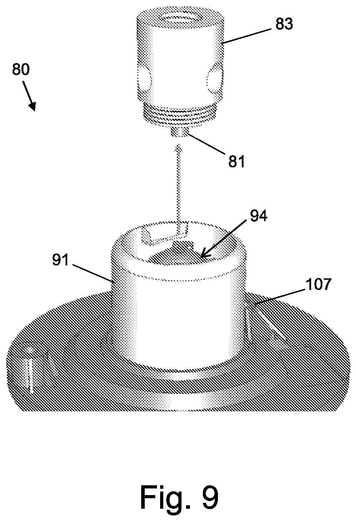

Fig. 9 schematically illustrates apparatus 80 when the spring housing is removed, showing hammer 94 positioned internally to rotatable element 91 and which is vertically displaceable, on release of the spring force provided within the spring housing, at a sufficiently high speed to upwardly drive the bottom of pointed striking pin 81 so as to pierce the diaphragm and cause the liquid gas to change state in order to suitably propel the projectiles. Striking pin 81 is normally positioned within manifold 83 below the diaphragm of the gas generating vessel.

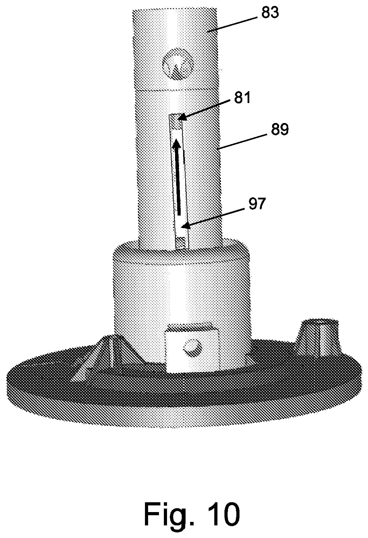

Fig. 10 illustrates striking pin 81 after it has been upwardly driven. As shown, spring housing 89 is formed with two opposed vertical grooves 97 through each of which a corresponding arm of the hammer is able to pass.

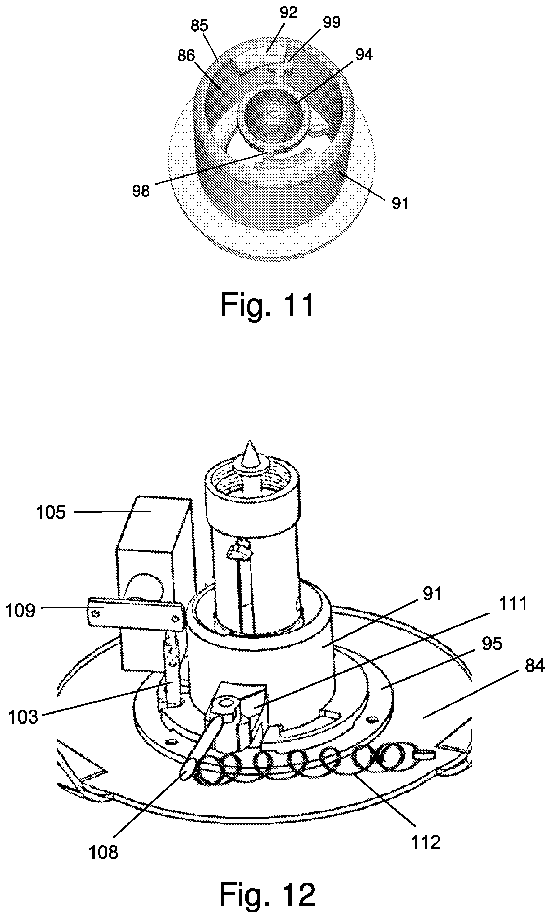

Fig. 11 illustrates the means for selectively releasing hammer 94. Rotatable element 91 has two opposed restrainers 92 circumferentially extending a limited distance along its inner face 86, adjacent to its rim 85. After the spring within the spring housing is tensed by an external tensioning device, as well known to those skilled in the art, hammer 94 is positioned such that the two protrusions 99 terminating at the end of a corresponding arm 98 which radially extends from the main central portion of the hammer are below a corresponding restrainer 92 and prevented from moving. When rotatable element 91 is circumferentially shifted, protrusions 99 become unrestrained, allowing hammer 94 to be vertically displaced.

Fig. 12 illustrates the disengaging unit, for initiating rotation of rotatable element 91 and the resulting forceful vertical displacement of the hammer. External spring 112 is attached at one end to bottom plate 84 and at the other end to rod 108 horizontally extending from rotatable element 91, for example from block 111 attached to the outer wall of rotatable element 91. After upper plate 95 is rotated to extend external spring 112, vertically oriented pin 103 in releasable engagement with ring 107 (Fig. 9) protruding outwardly from rotatable element 91 is inserted within an aperture formed in plate 95, to secure rotatable element 91 while external spring 112 is tensed. Electrical motor 105, e.g. a servomotor, rotatably drives cam 109, when activated, to disengage pin 103 from plate 95 and to enable angular displacement of rotatable element 91 upon release of the spring force applied by external spring 112.

Fig. 13 illustrates circular chamber 122 in which the undeployed parachute is stored. Chamber 122 has a discontinuous wall, which is provided with a plurality of circumferentially spaced U-shaped portions 126 extending vertically along the entire height of chamber 122. Manifold 83 is positioned within the interior of chamber 122, internally to each of the U-shaped portions 126. To facilitate positioning of each projectile rod 8 within the interior of a corresponding U-shaped portion 126 in preparation to be propelled, the internal wall of each U-shaped portion 126 facing manifold 83 may be formed with a bottom groove. Chamber 122 is connected to the object to be parachuted.

Alternatively, the puncturing mechanism is also operable when the compressed gas vessel is releasably engaged with the bottom of the manifold.

A parachute deployment operation may be initiated by a user who is entrapped within a skyscraper during a catastrophic event. As no other means of rescue is anticipated, the user mounts a harness to which is attached the apparatus of the present invention onto his upper torso. **After** the user jumps from an upper story, the MGG is triggered in midair while the projectiles are propelled behind, and rearwardly from, the user, allowing the parachute to be deployed within 0.3 sec following the triggering action due to the fast acting apparatus. This parachute deploying duration corresponds to a falling distance of only approximately 2 m. By virtue of the fast acting apparatus, a user will be assured of being protected even when jumping from a relatively low altitude such as 20 m above ground level, i.e. at a low story of a building. After descending to safety, the used vessel that generated the projectile propelling gas is replaced and the deployed parachute is folded, in anticipation of another parachute deployment operation, if necessary.

It will be appreciated that a parachute deployment operation may be initiated in response to many other scenarios that require an object to be parachuted.

Alternatively, the parachute deploying apparatus may be provided on light aviation aircraft, including an unmanned aerial vehicle (UAV) and Personal Aerial Vehicle (PAV), regardless of shape, construction material and geometry.

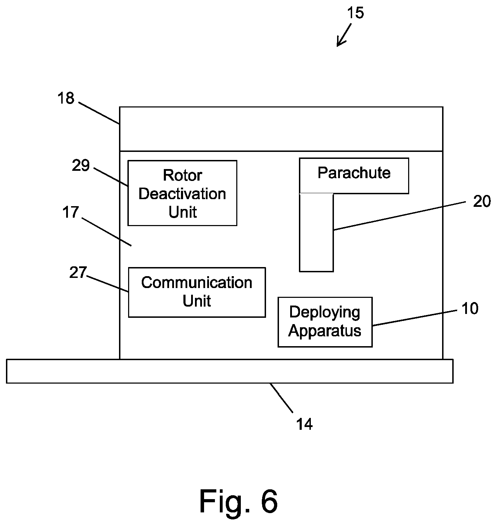

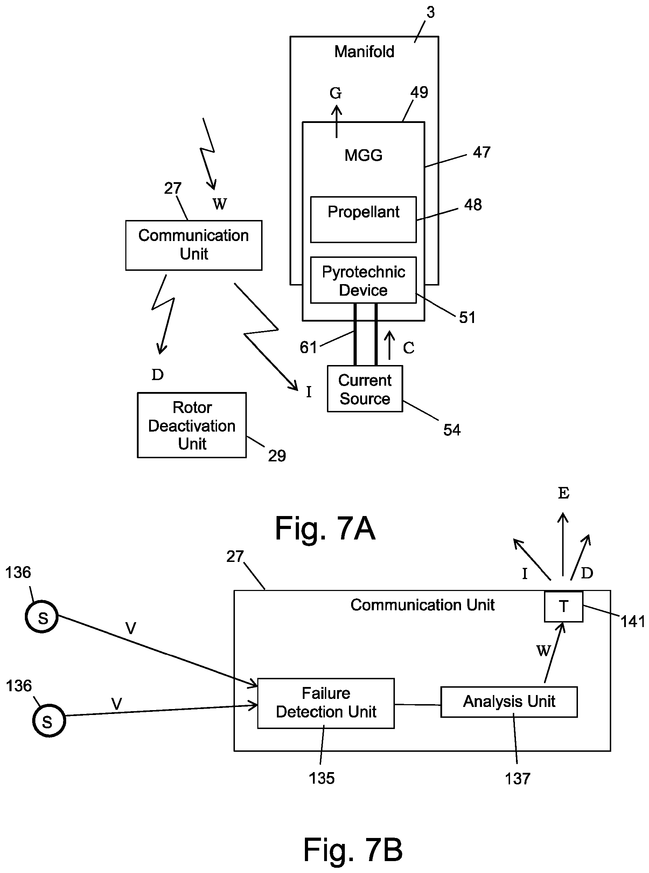

In this embodiment, as schematically illustrated in Figs. 6 and 7A-B, safety apparatus 15 is retained within a chamber 17 attached to a support element 14 of the aircraft and has a detachable lid 18. Safety apparatus 15 may comprise expandable parachute assembly 20 shown in a folded condition, parachute deploying apparatus 10 for instantly deploying parachute assembly 20, e.g. made of Kevlar ^{®}, upon demand, a wireless communication unit 27 for remotely controlling operation of the safety apparatus, and a rotor deactivation unit 29 synchronized with parachute deploying apparatus 10 for preventing damage to the parachute when being expanded. Lid 18 becomes detached from chamber 17 when the parachute becomes sufficiently expanded so as to apply a force onto the lid.

An operator interacting with a remote flight controller may transmit a wireless duress indicating signal W to the transceiver of communication unit 27 upon detection that the UAV has been subjected to conditions of duress requiring deployment of the parachute. After receiving signal W, communication unit 27 transmits a deactivation signal D for operating rotor deactivation unit 29, which is in electrical communication with a controller 39 of the rotor drive means. Deactivation of the rotors will ensure that the expanding parachute will not become entangled with the rotating blades. Simultaneously with the transmission of signal D, or shortly thereafter, communication unit 27 transmits an initiation signal I to current source 54, which in turn generates a suitable current C for activating pyrotechnic device 51. Current C flows to the pyrotechnic device 51 of vessel 47 via contacts 61 extending from the bottom end of the vessel. Activation of pyrotechnic device 51 causes the constituent components of propellant 48 to react and to generate gas G, which is discharged into manifold 3 in order to propel the plurality of projectiles.

The conditions of duress may be detected remotely by the operator in conjunction with a remote processor, or, alternatively, may be determined by an on-board failure detection unit 135, as shown in Fig. 7B. Failure detection unit 135 of communication unit 27 receives a signal V output from each on-board sensor 136, which is configured to detect a different UAV-associated flight related characteristic, and an analysis unit 137 processes and analyzes all received signals V according to predetermined stored instructions. A wireless duress indicating signal W will be generated by analysis unit 137 upon determination that the UAV has become subjected to a failure that requires termination of a current flight, whether a relative low-degree failure or a relative high-degree failure. A relative high-degree failure is generally uncorrectable and has a risk of being catastrophic and endangering nearby UAVs or bystanders, and therefore requires deployment of the parachute. The transceiver 141 of communication unit 27 transmits parachute deployment apparatus initiation signal I, rotor deactivation signal D, and an encrypted signal E transmittable to a remote station as will described hereinafter, following generation of duress indicating signal W.

One way of distinguishing between a relative low-degree failure and a relative high-degree failure is by the amplitude of vibrations reflective of vibrations experienced by the UAV body during flight. Another way is by the magnitude of angular motion such as roll, pitch and yaw experienced by the UAV body during flight, which may be indicative of a mechanical failure, such as when a rotor arm is insufficiently tightened to the UAV body.

It will be appreciated that a remote processor accessible to the operator may also receive a signal V output from each on-board sensor 136.

The fully deployed parachute will be able to intercept moving aircraft fragments, if any, and to sufficiently slow the descent of the disabled aircraft so as to minimize damage of a collision involving the aircraft.

The entire safety apparatus may weigh as little as 1-1.5 kg when the object to be parachuted is a human, or even less for lighter parachuted objects. For example, the safety apparatus may weigh 260 gm for a parachuted object weighing 3.5 kg or 450 gm for a parachuted object weighing 7 kg.

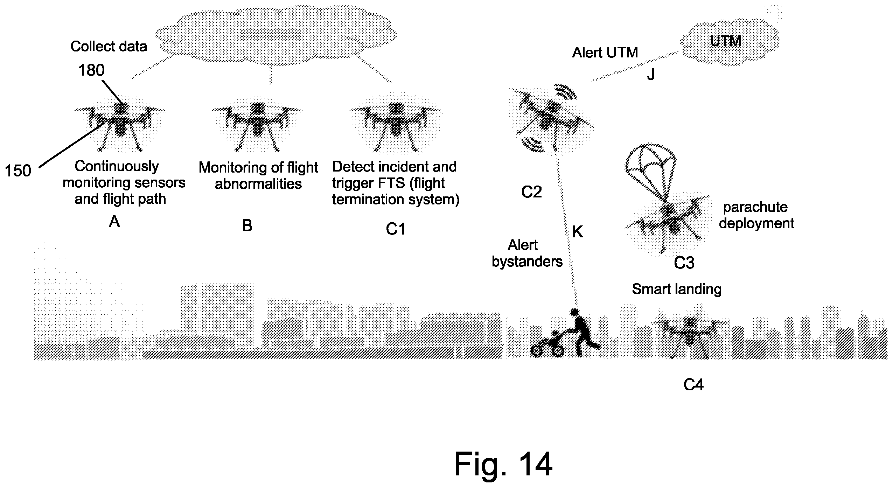

Fig. 14 schematically illustrates an exemplary UAV 150 equipped with safety apparatus 180 of the invention, when operating, autonomously or in conjunction with a remote operator, in one of the following three modes:
A. Monitoring mode- The failure detection unit monitors the signals output from each on-board sensor to determine whether they are representative of conditions of duress.
   The sensors generally include an inertial measurement unit (IMU) having one or more of an accelerometer, gyroscope, and magnetometer to determine a current airborne orientation and acceleration of the UAV.
   A predetermined flight path stored in a memory device of the failure detection unit is also monitored by receiving signals indicative of current UAV altitude which are output from a barometer, signals indicative of current UAV geographical location output from a GPS sensor, and signals indicative of current UAV speed output from an airspeed sensor.
   Environmental sensors, such as an UV sensor, temperature sensor and humidity sensor, may be used to estimate the deterioration of the UAV body for purposes of predictive maintenance.
   Monitoring continuity of wireless communication with respect to the UAV is made possible by a serial communication unit.
B. Flight Abnormality mode- A flight abnormality, or a relative low-degree failure, is detected in this mode. When a relative low-degree failure, such as a crack in a rotor blade, is detected in response to sensor readings, an updated flight path is transmitted to the memory device to force the UAV to fly to a specified ground station, to undergo a repair or maintenance operation.
   The following is a non-limiting list of relative low-degree failures:
   a) deviation from a predetermined angular orientation;
   b) deviation from a predetermined change in angular orientation;
   c) deviation from predetermined translational or angular acceleration;
   d) deviation from predetermined altitude;
   e) deviation from predetermined flight path;
   f) predetermined drop in UAV battery voltage as determined by a voltage sensor; and
   g) loss in communication as evidenced by an inability to be properly guided.
C. Critical Failure mode- A critical, or relative high-degree, irreversible UAV failure is detected in this mode. A relative high-degree failure may be detected when the value of a sensor reading, or a combination of sensor readings, is significantly greater than a predetermined threshold relative to that which is indicative of a relative low-degree failure. Alternatively, the profile of a signal output, such as a predetermined spike, is uniquely characteristic of a relative high-degree failure.

In this mode, the UAV rotors or other flight generators are deactivated in step C1, a critical failure alert signal J is transmitted to an unmanned aircraft traffic management system (UTM) to make neighboring UAVs aware of the critical failure and optionally an alert signal K is

transmitted to bystanders in step C2 to prevent occurrence of a catastrophic event, the UAV-equipped parachute is deployed as described hereinabove in step C3, and a smart landing procedure is performed, for example as described in copending WO 2018/173040 by the same Applicant, whereby a safety-ensuring processing unit is operable in conjunction with a downwardly facing collision avoidance system to calculate a required direction of descent in order to avoid a detected obstacle and to cause a sufficient number of airfoils to become circumferentially displaced, to cause the descending UAV to change its direction of descent in order to avoid the obstacle, for example autonomously, in step C4.

Safety apparatus 180 may be an add-on device, configured as one or more interconnected housings which are mounted on an existing UAV, in order to upgrade the existing UAV.

The failure detection unit may be provided at the bottom of the same housing in which the parachute deployment apparatus is retained.

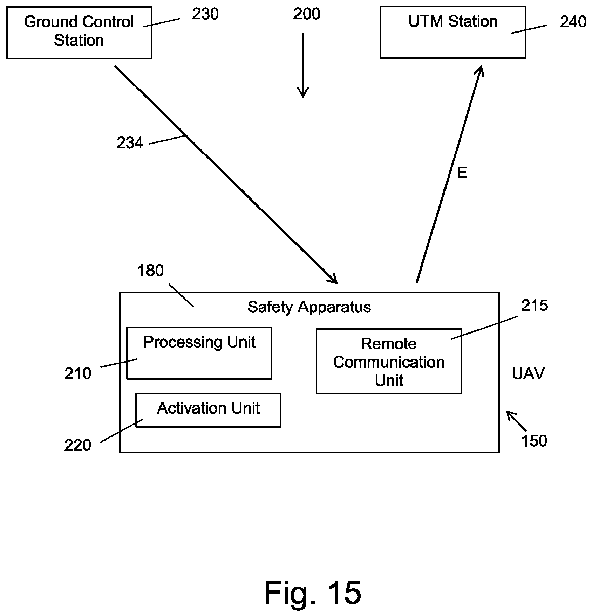

Fig. 15 illustrates a UAV-based damage avoidance system 200. Although only one UAV 150 is shown, system 200 is configured to communicate with a plurality of UAVs 150 simultaneously.

System 200 is shown to comprise ground control station (GCS) 230, which is manned with one or more operators, usually interacting with a remote flight controller to generate a beacon 234, characterized by a broadband video and data link, to control the flight path of a UAV 150. One operator may control more than one UAV.

It will be appreciated that system 200 is operable without GCS 230, when a UAV 150 operates autonomously.

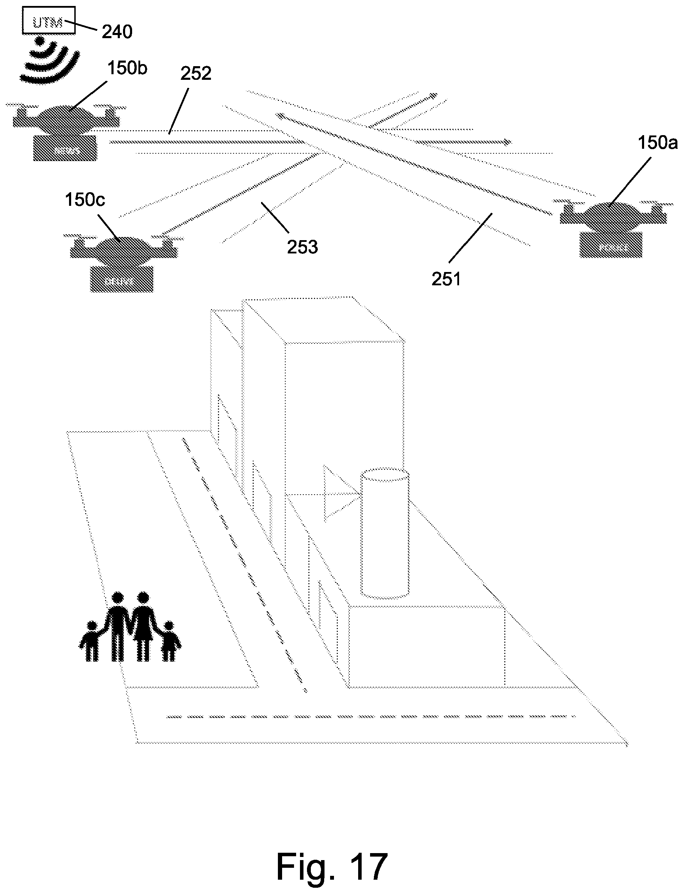

A UTM station 240 is also shown. UTM station 240, which may be configured with a plurality of distributed sub-stations, comprises sophisticated communication and processing equipment that are configured to allocate low-altitude airspace to each of a plurality of UAVs 150, so that each can fly along a unique flight path. Fig. 17 schematically illustrates the generation of three different-altitude flight paths 251-3 by UTM station 240, along which UAVs 150a-c, respectively, are authorized to fly. For example, UAV 150a may be a police UAV that allows law enforcement agents to observe an event from a different view, UAV 150b may be a UAV that is commissioned by a news agency, and UAV 150c may provide delivery services. The capabilities of UTM station 240 are advantageously enhanced by system 200, whereby it communicates with neighboring UAV as to the onset of a critical failure event involving one of the registered UAVs.

Safety apparatus 180 of UAV 150 is configured with three main units: (1) processing unit 210 for processing the on-board sensor outputs to determine the existence of a relative low-degree or high-degree failure, generally in conjunction with failure detection unit 135 and analysis unit 137 shown in Fig. 7B, (2) remote communication unit 215 for generating and transmitting an encrypted signal E provided with a UAV identifier to GCS 230, if in data communication therewith in order to transmit the data associated with the output from each on-board sensor, or to UTM station 240 so as to be indicative of a critical failure alarm signal, and (3) activation unit 220 for activating the flight generator deactivation unit, parachute deployment apparatus, warning devices for bystanders, and emergency landing equipment, if necessary.

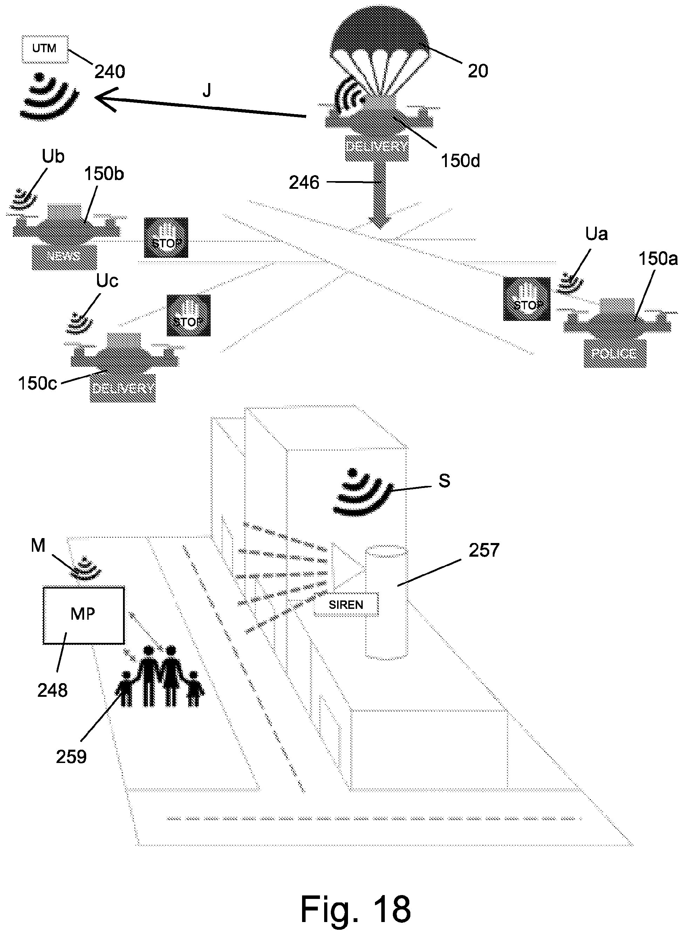

As schematically illustrated in Fig. 18, immediately following detection of a relative high-degree failure, the UAV 150d experiencing the critical failure event (hereinafter the "failed UAV") transmits a critical failure alarm signal J to UTM station 240. The critical failure alarm signal J generally includes a current location and altitude of the failed UAV 150d as well as its planned descent path 246. Since the failed UAV 150d commences a descending operation after having terminating its flight and deploying its parachute 20, the failed UAV is liable to pass through the airspace of UAVs flying at lower altitudes and cause a dangerous collision. To prevent such a dangerous occurrence, UTM station 240 transmits update signals Ua-c, each of which being representative of an UAC-specific updated flight path, simultaneously to all UAVs 150a-c, respectively, which are predicted to cross, or to be in the vicinity of, e.g. within 5 meters, the descent path 246 of the failed UAV 150d, so that these neighboring UAVs 150a-c will fly away from the vicinity of the descent path. The failed UAV 150d may generate its descent path 246, which may be dynamic for example in response to visualized obstacles, following initiation of the parachute deploying operation and transmit the instantaneous descent path to UTM station 240.

When failed UAV 150d is a fixed-wing aircraft, parachute 20 may be deployed during the course of a descending operation as a fixed-wing aircraft is configured to glide following deactivation of each lift generator by the lift generator deactivation unit. The failed UAV 150d transmits the glide path to UTM station 240 to alert the neighboring UAVs 150a-c. When the failure detection unit detects a UAV acceleration that is greater than a predetermined value, e.g. 3.0 m/s², which is indicative of the commencement of a free fall rather than of a gliding operation, a parachute deploying operation i then automatically initiated.

UTM station 240 may also be adapted to alert bystanders 259 as to the approaching failed UAV. UTM station 240 is able to access the local cellular base station and to determine which mobile phones (MP) 248, such as smartphones, held by corresponding users are in the vicinity of the forecasted descent path 246 of failed UAV 150d, generally at ground level 243. An alert signal M is then transmitted to these mobiles phones 248 over the cellular network to allow the users to find immediate shelter. These users are generally afforded up to 10 seconds to find shelter since the descent rate of a parachuted UAV is on the order of 3-4 m/s and the UAV generally fly at an altitude of 50-100 m. An alert signal S may also be transmitted by UTM station 240 to the receiver of an on-ground siren 257, so that a loud warning sound will be immediately emitted thereby, to indicate to bystanders located in the vicinity of the descent path of failed UAV 150d that they must immediately significantly change their location or seek shelter.

Alternatively, UTM station 240 alerts the neighboring UAVs and each neighboring UAV generates its own updated flight path.

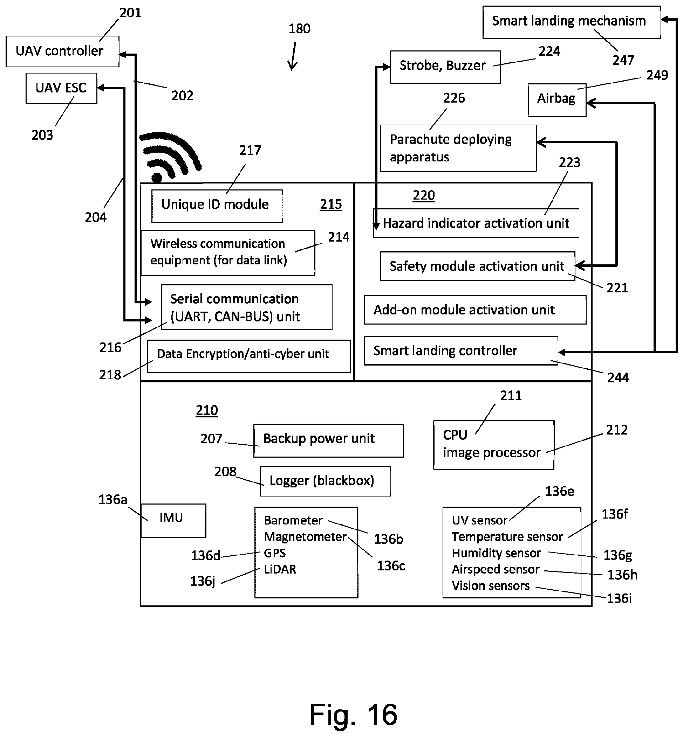

Fig. 16 schematically illustrates components of safety apparatus 180. Safety apparatus 180 need not comprise all of the illustrated components; the number of types of components provided with safety apparatus 180 is dependent upon the desired implementation.

Processing unit 210 comprises the following on-board sensors: IMU 136a, barometer 136b, magnetometer 136c, GPS sensor 136d for determining real-time UAV locations and for purposes of geo-fencing, UV sensor 136e, temperature sensor 136f, humidity sensor 136g, airspeed sensor 136h, and vision sensor 136i and LiDAR sensor 136j for use in conjunction with a smart landing procedure. The battery voltage may be determined through the serial communication unit 216 of remote communication unit 215, or alternatively through a voltage sensor. If the battery voltage is low, a backup power unit 207 that is independent of the UAV battery may be employed. All of these sensor outputs may be recorded in one or more loggers 208 that are protected in a black box-type arrangement. Some sensor outputs are processed by a CPU 211, and some are processed by an image processor 212.

In remote communication unit 215, wireless communication equipment 214 is used to establish a data link with the GCS or with the UTM station. Any time a data link is made, a UAV identifier stored in module 217 is included in the transmitted signal, which is encrypted by unit 218. Serial communication unit 216 is in communication with the UAV controller 201, i.e. autopilot, via bus 202 and with the UAV electronic speed controller (ESC) 203 via bus 204.

Activation unit 220 comprises safety module activation unit 221, generally configured with a rotor deactivation unit, or a deactivation unit for any other lift generator, and parachute deploying apparatus 226, or deploying apparatus for any other type of fabric used for a damage mitigating operation. Activation unit 220 may also comprise a hazard indicator activation unit 223 that includes warning devices 224 for bystanders, such as a strobe light and a buzzer. The strobe light is visible when the UAV is located at a significant height above ground level, e.g. 150 m, and the buzzer is audible when the UAV is located at a relatively low height above ground level, e.g. 50 m, yet the bystander is afforded sufficient time to be distanced from the descending UAV after sensing the alarm signal generated by a warning device 224 as the descent rate of the UAV under the influence of a deployed parachute is less than 5 m/s. Activation unit 220 may also comprise a smart landing mechanism 247 configured to perform emergency landing under the guidance of a smart landing controller 244, which may also command the deployment of an airbag 249 to reduce the impact with an existing surface during an emergency landing procedure.

In other implementations which are not part of the present invention, the safety apparatus according to any embodiment described herein may be used not only for deploying a parachute, but also for deploying other damage mitigating fabric types that are retained in a chamber attached to the UAV body. For example, a net mesh made from a strong fiber such as Kevlar^{®} or Dyneema^{®}, when deployed, may be used to entrap a malicious UAV. Alternatively, a fire suppressing fabric, such as one made of Kevlar^{®} and interspersed with fiberglass, may be deployed.

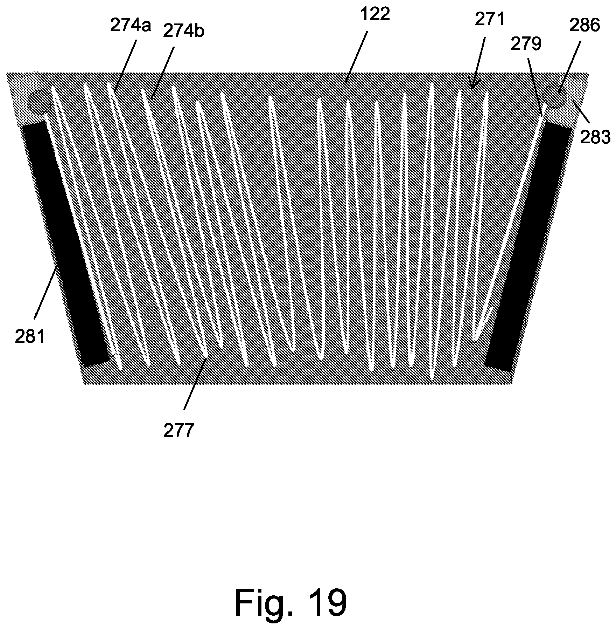

As shown in Fig. 19, the fabric 271 is retained in a folded undeployed condition within chamber 122. Fabric 271 may be folded in the same way for any desired implementation of the safety apparatus. A group of folded portions 274 of fabric 271 is retained within chamber 122 between two adjacent U-shaped, or otherwise hollow, e.g. concave, portions 126 of chamber 122 (Fig. 13), such that a first folded portion 274a is separated without contact from a second folded portion 274b adjacent to folded portion 274a, with the exception of an expandable crease 277 between folded portions 274a and 274b. Projectile rod 281 is insertable within an oblique tube that is secured within the interior of a corresponding portion 126, and a peripheral portion 279 of fabric 271 is attached by attachment means 286 to a corresponding projectile 283 at the distal end of rod 281.

The number of projectiles 283 employed is dependent upon the weight or size of fabric 271. For example, if fabric 271 has a weight of 500 g, four projectiles 283 that are circumferentially and evenly spaced around the periphery of circular chamber 122 by an angular spacing of 90 degrees and attached to a peripheral portion 279 of fabric 271 will be used to ensure an optimal uniform ejection of the fabric from chamber 122.

Although not shown, fabric 271 is continuous with other groups of folded portions each of which retained between a different pair of hollow portions 126. Chamber 122 may have any desired shape, for example circular or polygonal.

An exemplary folded condition is shown, such that second folded portion 274b is positioned to the side of first folded portion 274a, but it will be appreciated that any other suitable folded portion orientation and condition is possible insofar as each folded portion 274 is able to be expanded uninhibitedly and rapidly upon ejection of the projectiles 283 from chamber 122.

Fabric 271 is able to achieve a desired expanded dimension simultaneously with ejection of the plurality of projectiles 283 from chamber 122 by virtue of a combination of the following factors: (a) a rapidly reacting gas generator, (b) the obliquely extending hollow tubes through which the generated gas flows applies an explosive force onto each projectile, causing each projectile to be propelled distally in a different direction by a distance designed to cause the fabric to become tensioned when expanded and to perform a desired damage mitigating action, and (c) the undeployed fabric is stored within the chamber in a folded condition such that each folded portion of the fabric is separated without contact from another folded portion, allowing each folded portion to be expanded uninhibitedly and rapidly. For example, the fabric is fully deployable within less than a second, e.g. within less than 0.3 sec, following a gas generator triggering event initiated remotely by an operator or by other means, such as imaging means. The imaging means may be configured to identify a malicious UAV, or one that has intruded into an unauthorized flight zone, or to identify the presence of a fire, and to deploy fabric 271 once the initiating UAV provided with the safety apparatus and the imaging means is within deploying range of a target.

It will be appreciated that fabric 271 may also be satisfactorily expanded to perform a damage mitigating operation even when the hollow tubes through which the generated gas flows do not extend obliquely with respect to the manifold, but rather extend substantially parallel to the longitudinal axis of the manifold.

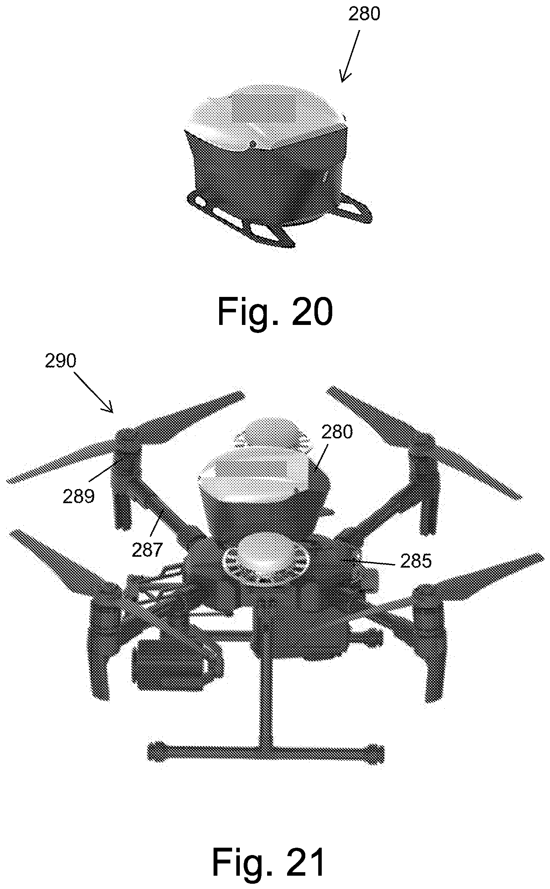

Figs. 20 and 21 illustrate the secured positioning of safety apparatus 280, which may comprise one or more components of safety apparatus 180 of Fig. 16, on top of a region of the platform 285 of UAV 290 which is central to the plurality of rotor arms 287. Each rotor arm 287 carries one or more rotors 289 functioning as a lift generator. The fabric-retaining chamber including the hollow portions thereof may be connected to the housing of safety apparatus 280. Alternatively, safety apparatus 280 may be securely positioned to the underside of platform 285. The retained fabric may be unconnected to the housing of safety apparatus 280 or to the body of UAV 290 so as not to limit the distance to which the fabric may be propelled.

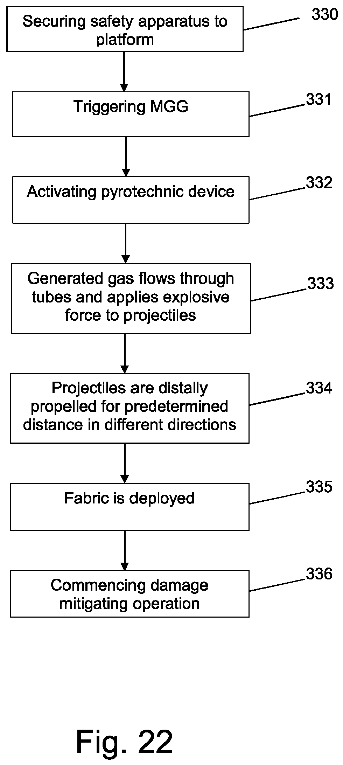

As shown in Fig. 22, a damage mitigating operation may be performed after the safety apparatus is secured to a platform in step 330, whether a fixed platform or a movable platform. Following triggering the MGG in step 331 by electrical or mechanical means, the pyrotechnic device becomes activated in step 332, causing the constituent components of the propellant to react and to generate energy intensive gas. The generated gas simultaneously flows through each tube extending from the manifold in step 333, applying an explosive force onto a corresponding projectile. The explosive force is converted into momentum, and each projectile is therefore distally propelled in a different direction for a predetermined distance in step 334. This distance is reliably achieved by providing a sufficient dose of combustible material and a sufficient amount of activation current, to cause the fabric to be deployed in step 335 by being expanded to a desired dimension. The predetermined distance to which the projectiles are propelled by the explosive force may range from 15-50 m, e.g. 20 m, when the projectiles are ejected upwardly, and may be up to 100 m when the projectiles are ejected downwardly.

While the fabric is fully expanded, the projectiles, whether upwardly ejected projectiles, downwardly ejected projectiles or laterally ejected projectiles, remain attached by the attached peripheral portion of the fabric after having transferring their kinetic energy to the fabric to urge the latter to an expanded condition. Since the projectiles are propelled a significant distance, the expanded fabric is ensured of not becoming entangled with a rotating lift generator, and therefore is no need for deactivating the lift generator. A damage mitigating operation is then commenced in step 336 through the intervention of the expanded fabric.

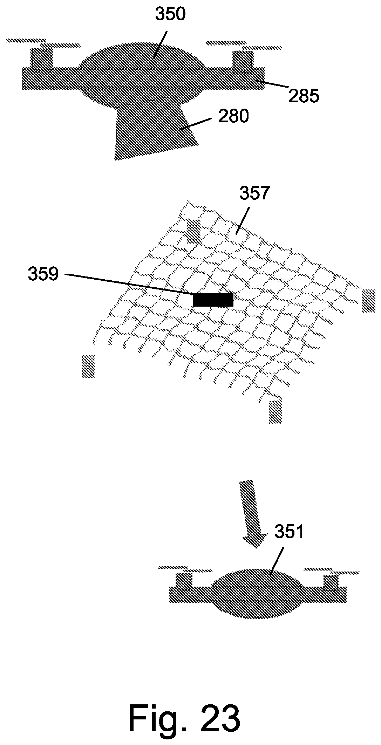

Fig. 23 illustrates an implementation of deploying a net in order to intercept an unwanted UAV 351. When unwanted UAV 351 is discovered, for example when found by an imaging system to be dangerously close to a security facility such as an army base or an airport, safety apparatus 280 of intercepting UAV 350-is activated. Safety apparatus 280 is mounted below the platform 285 of intercepting UAV 350, so that when intercepting UAV 350 is located above unwanted UAV 351 and safety apparatus 280 is activated in response to an autonomously or remotely generated triggering signal, net 357 will be downwardly ejected to intercept and entrap unwanted UAV 351. Net 357 may be configured with auxiliary parachute deploying apparatus 359, which is configured to be automatically deployed when net 357 becomes engaged with unwanted UAV 351, such as by means of one or more sensors, to prevent damage to underlying bystanders if the intercepted UAV 351 were to undergo a dangerous free fall. Alternatively, net 357 may remain connected to safety apparatus 280 or to the body of intercepting UAV 350 by a tow line, to facilitate the towing of intercepted UAV 351 to a ground station.

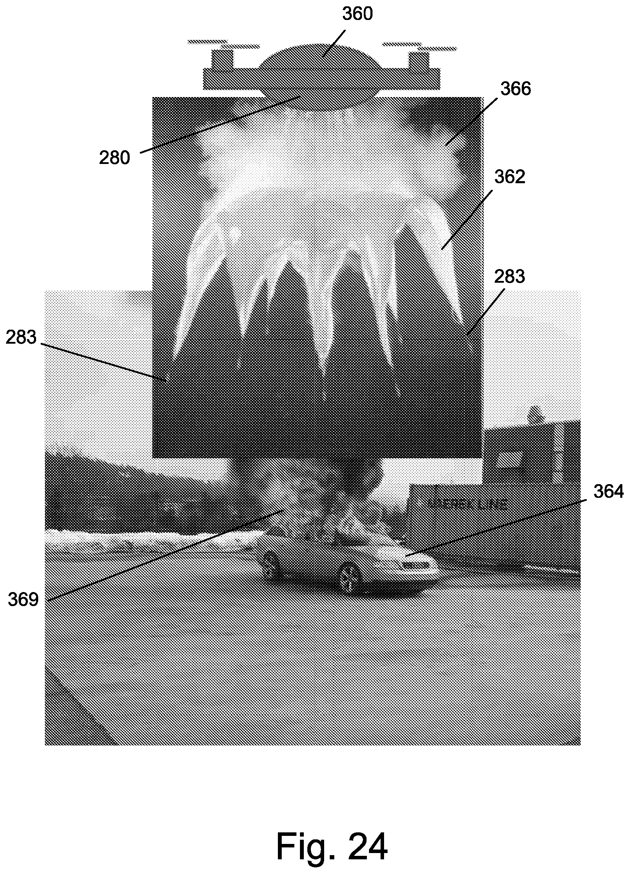

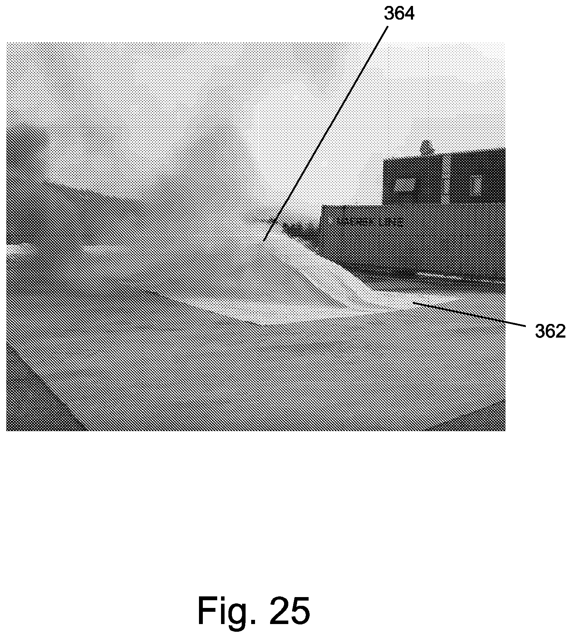

Figs. 24 and 25 illustrate an implementation of deploying fire suppressing fabric 362 for extinguishing a burning motor vehicle 364 by means of downwardly directed safety apparatus 280 mounted on an initiating UAV 360. This arrangement may likewise be used for helping to extinguish a fire of serious ramifications, for example one that is burning within a high-story structure or at a forest.

Fabric 362 is made of an inflammable material, which, after being deployed in a spread and expanded condition and having been positioned to cover substantially the entire source of fire, will smother the fire by limiting or altogether excluding the exposure of the fire to oxygen.

Fire suppressing fabric 362 is shown in Fig. 24 after having been ejected downwardly from the safety apparatus by the generated gas 366 while the projectiles 283 gravitationally direct the expanded fabric onto the fire 369 that is burning within motor vehicle 364. The predetermined angular disposition relative to a horizontal plane of the plurality of projectiles 283, defined by the safety apparatus, is dependent upon the weight and size of fabric 362; a larger fabric requires a correspondingly larger angle relative to a horizontal plane, and vice versa for a smaller fabric. Fabric 362 is shown in Fig. 25 to completely cover the motor vehicle 364 while the fire is being smothered.

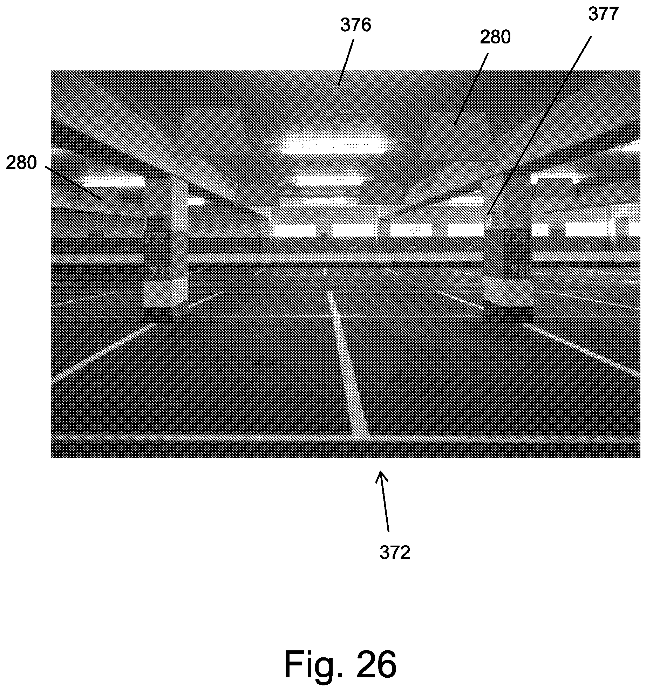

Fig. 26 illustrates an implementation of deploying fire suppressing fabric for extinguishing a fire that is burning within a parking lot 372, or within any other indoor structure, by means of a plurality of downwardly directed safety apparatus units 280 mounted on the ceiling 376 of the parking lot 372. A plurality of heat sensors 377 interspersed within parking lot 372 may be the stimulus of the triggering signal, in order to deploy a fabric located proximately to the source of the detected fire.

The use of fire suppressing fabric is advantageous relative to a sprinkler system or fire extinguishers since the widespread damage caused by discharged water or powder is able to be avoided.

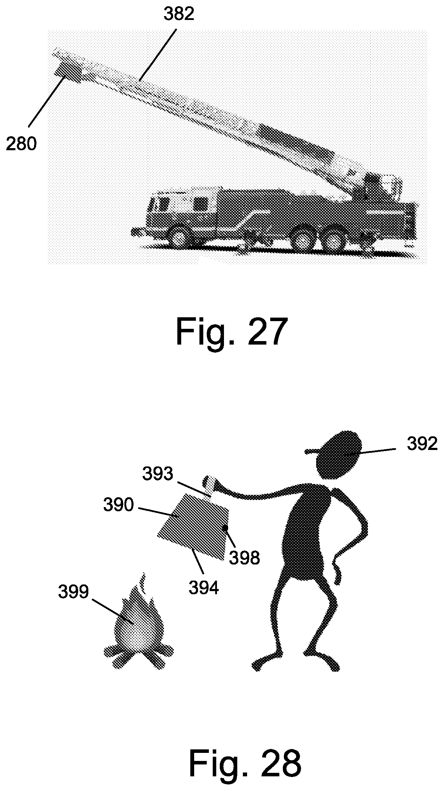

Fig. 27 illustrates an implementation of deploying fire suppressing fabric by means of downwardly directed safety apparatus 280 mounted at the end of a fire truck ladder 382.

Fig. 28 illustrates an implementation of deploying fire suppressing fabric by means of hand-held safety apparatus 390, which may be configured similarly to safety apparatus 10 of Figs. 1-4. When user 392 has become aware of fire 399, the handle 393 of apparatus 390 is held such that the distal end 394 of apparatus 390 is facing the fire 399, whether distal end 394 is downwardly directed, upwardly directed or laterally directed. A triggering action is then initiated by depressing a dedicated button 398, or otherwise manipulating a suitable input device, to activate the gas generator. Since the projectiles are designed to be propelled a relatively small distance on the order of up to only a few meters, often less than one meter, the corresponding recoil force experienced by user 392 is of a sufficiently relatively small magnitude to be dissipated by the user's body.

### Example 1

The parachute deploying apparatus weighing 450 gm was carried by a multi-rotor UAV having a weight of 7 kg, a diameter of 1.10 m and a height of 0.5 m. The canopy was made of Nylon 66 ripstop fabric, and had a diameter of 1.75 m. Six suspension lines, each having a length of 1.6 m, were connected to the aircraft. Three draw cords, each having a length of 25 cm, were connected to a corresponding projectile configured with an arrow-shaped head.

Three inclined tubes extended from the manifold. A projectile having a weight of 23 gm, and an arrow-shaped head connected to a rod having a length of 6 cm was inserted within a corresponding tube. Flexible polymeric material was applied to the tubes, providing sealing after insertion of the corresponding projectile therewithin.

The single MGG that was threadedly engageable with the manifold was the Autoliv A7Zr2.1, IMI-Type 610258300, manufactured by Autoliv, Ogden, Utah. The MGG had a diameter of 1.5 cm and a length of 4 cm. The pyrotechnic device produced 8 liters of nitrogen.

The projectiles were propelled a distance of 112.5 cm within a time period of 0.28 seconds after the trigger was initiated.

### Example 2

During the flight of a six-rotor UAV, a crack developed in one of the rotor blades. The failure detection unit initiated the Flight Abnormality mode, and the UAV was forced to fly to a specified ground station, in order to repair the crack.

An accelerometer operable in the 200 Hz range was employed to acquire vibration amplitude readings. Vibration amplitude of less than 0.5 m/s² is reflective of normal UAV operation. Vibration amplitude of greater than 0.5 m/s² is reflective of an anomalous flight condition, such as the development of a crack in a rotor blade. Vibration amplitude of greater than 3.0 m/s² is reflective of a critical failure that requires the immediate termination of flight and the deployment of a parachute.

While some embodiments of the invention have been described by way of illustration, it will be apparent that the invention can be carried out with many modifications, variations and adaptations, without exceeding the scope of the claims.

## Claims

1. An aerial vehicle based damage avoidance system (200) operable during onset of a critical failure event involving an aerial vehicle, comprising:
a) a plurality of aerial vehicles (150a-d), each flying along a unique flight path and comprising a plurality of flight dependent systems; and
b) an unmanned aircraft traffic management system (UTM) station (240) in data communication with said plurality of aerial vehicles and configured to allocate a low-altitude airspace (251-253) to each of said plurality of aerial vehicles and to thereby grant authorization to fly along the unique flight path,
wherein each of said aerial vehicles comprises a safety apparatus (180) for identifying a critical irreversible aerial vehicle failure that has a risk of being catastrophic and endangering nearby aerial vehicles and bystanders, said safety apparatus comprising:
i. one or more on-board sensors (136a-j) including a location detector which are configured to detect flight related characteristics;
ii. a processing unit (210) configured to process outputs of each of the on-board sensors and to detect the critical failure;
iii. a remote communication unit (215) configured to transmit an instantaneous location identifier to said UTM station and to generate and transmit an aerial vehicle specific critical failure alarm signal (J) to said UTM station following detection of the critical failure;
iv. a voltage sensor or a serial communication unit (216) of said remote communication unit (215) for determining a voltage of a battery configured to power at least one lift generator (289) of the aerial vehicle (150a-d); and
v. an activation unit (220) configured to activate a parachute deployment apparatus (10, 226) following detection of the critical failure,
wherein said safety apparatus (180) is operational independently of said flight dependent systems **,** one of which is liable to be malfunctioned due to the critical failure,
wherein said safety apparatus further comprises:
an activation unit (220) configured to activate a lift generator deactivation unit (29, 221) and the parachute deployment apparatus (10, 226) following detection of the critical failure, to initiate a descent operation along a descent path (246) following termination of flight of the failed aerial vehicle (150d) and deployment of its parachute (20); and
a backup power unit (207) that is independent of the battery and is employed when the battery voltage is less than a predetermined value,
wherein the remote communication unit (215) of said safety apparatus has wireless communication equipment (214) to establish a data link with said UTM station (240) whereby an encrypted signal (E) provided with an identifier of the failed aerial vehicle is generated and transmitted to said UTM station,
wherein said UTM station is configured to simultaneously transmit an update signal (Ua-c) to all neighboring aerial vehicles (150a-c) that are predicted to cross, or to be in a vicinity of, the descent path (246) of the failed aerial vehicle (150d), said update signal being indicative of an aerial vehicle specific updated flight path that causes each of said neighboring aerial vehicles to urgently change its flight path to avoid collision with the failed aerial vehicle,
and wherein each lift generator (289) comprises a rotor or a propeller, and a motor or engine configured to drive the lift generator (289) is provided as drive means.

2. The system according to claim 1, wherein-
the UTM station (240) is additionally configured to alert bystanders (259) as to an approach of the failed aerial vehicle (150d); or
the UTM station is also in data communication with a local cellular base station that is in communication range of the descent path (246) of the failed aerial vehicle, and is thereby configured to determine which one or more mobile phones (248) held by corresponding users are located in the vicinity of the descent path of the failed aerial vehicle and to transmit an alert signal (M) to the one or more mobiles phones over a cellular network to allow the corresponding users to find immediate shelter; or
the UTM station is also in data communication with a receiver of an on-ground siren (257), so that a warning sound will be immediately emitted thereby, to indicate to bystanders located in the vicinity of the descent path (246) of the failed aerial vehicle that they must immediately significantly change their location or seek shelter; or
the failed aerial vehicle is configured to alert bystanders as to an approach of the failed aerial vehicle.

3. The system according to claim 1, wherein the safety apparatus (180) further comprises a failure detection unit (135) and an analysis unit (137), and the processing unit (210) is additionally configured to additionally process the outputs of each of the on-board sensors (136a-j), to detect a flight abnormality in the aerial vehicle (150a-d) in which the processing unit is mounted, and to initiate generation of another aerial vehicle specific updated flight path that forces the aerial vehicle to fly to a specified ground station (230) and to undergo a repair or maintenance operation, a flight abnormality being a failure of a lower degree than the critical failure.

4. The system according to claim 1, wherein the failed aerial vehicle (150d) is an unmanned fixed-wing aircraft which is configured to glide following deactivation of each lift generator (289) by the lift generator deactivation unit (29).

5. The system according to claim 4, wherein one of the on-board sensors is an inertial measurement unit (IMU) having one or more of an accelerometer, gyroscope, and magnetometer to determine a current airborne orientation and acceleration of the UAV and a parachute deploying operation is automatically initiable following detection of a failed aerial vehicle acceleration that is greater than a predetermined value which is indicative of commencement of a free fall rather than of a gliding operation.

6. The system according to claim 1, configured to perform a smart landing procedure wherein the activation unit (220) further comprises a smart landing mechanism (247) configured to perform emergency landing under guidance of a smart landing controller (244), wherein the smart landing controller is operable to command deployment of an airbag (249) for reducing impact with an existing surface during an emergency landing procedure; or
the aerial vehicle comprises a plurality of airfoils and a safety-ensuring processing unit is operable in conjunction with a downwardly facing collision avoidance system, to calculate a required direction of downward travel in order to avoid a detected obstacle and to cause a sufficient number of the airfoils to become circumferentially displaced, to cause the descending aerial vehicle to change its direction of descent in order to avoid the obstacle; or
the smart landing procedure comprises the use of at least one LiDAR sensor (136j).

7. The system according to claim 3, wherein the flight abnormality is selected from the group consisting of a predetermined drop in voltage of the battery configured to power the at least one lift generator (289) of the aerial vehicle (150a-d) and a loss in flight dependent communication.

8. The system according to claim 1, wherein each of the aerial vehicles (150a-d) additionally comprises:
an aerial vehicle body configured with the at least one lift generator (289) in the form of a rotor;
drive means configured to drive the at least one rotor;
a controller in electrical communication with a rotor deactivation unit (29, 221) configured to deactivate the drive means
the parachute deployment apparatus (10, 226) interactable with an undeployed parachute (20) which is retained in a chamber (17, 122) attached to said aerial vehicle body; and
the failure detection unit (135).

9. The system according to claim 8, wherein the parachute deployment apparatus (10, 226) comprises:
a manifold (3, 33) positioned within an interior of, and fixed to, the chamber (17, 122), with said manifold is releasably coupled a single vessel (47, 87) within which pressurized gas (G) is generated;
a gas generator (49, 81) which cooperates with said vessel;
a plurality of hollow tubes (8) which extend obliquely and upwardly from, and are in fluid communication with, said manifold; and
a plurality of projectiles (13), each of which formed with a rod (11) that is receivable in a corresponding one of said tubes and to each of which is connected a cord that is also connected to a corresponding portion of the undeployed parachute (20),
wherein the pressurized gas which is generated upon triggering of said gas generator is flowable through each of said tubes to propel said plurality of projectiles in different directions and to cause the parachute to become deployed,
wherein the parachute deploying apparatus is configured to cause the parachute to achieve a desired canopy diameter simultaneously with ejection of the parachute from the chamber.

## Patentansprüche

1. Auf einem Luftfahrzeug basierendes Schadensvermeidungssystem (200), das bei Eintritt eines kritischen Ausfallereignisses, an dem ein Luftfahrzeug beteiligt ist, betreibbar ist, umfassend:
a) eine Vielzahl von Luftfahrzeugen (150a-d), die jeweils entlang einer einzigartigen Flugbahn fliegen und eine Vielzahl von flugabhängigen Systemen umfassen; und
b) eine Station (240) eines unbemannten Flugverkehrsmanagementsystems (UTM), die in Datenverbindung mit der Vielzahl von Luftfahrzeugen steht und konfiguriert ist, um jedem der Vielzahl von Luftfahrzeugen einen Luftraum in niedriger Höhe (251-253) zuzuweisen und dadurch die Genehmigung zum Fliegen entlang der einzigartigen Flugbahn zu erteilen,
wobei jedes der Luftfahrzeuge eine Sicherheitsvorrichtung (180) zum Identifizieren eines kritischen irreversiblen Luftfahrzeugausfalls umfasst, der das Risiko birgt, katastrophal zu sein und in der Nähe befindliche Luftfahrzeuge und Umstehende zu gefährden, wobei die Sicherheitsvorrichtung umfasst:
i. einen oder mehrere Bordsensoren (136a-j), einschließlich eines Standortdetektors, die konfiguriert sind, um flugbezogene Merkmale zu erkennen;
ii. eine Verarbeitungseinheit (210), die konfiguriert ist, um Ausgänge von jedem der Bordsensoren zu verarbeiten und den kritischen Ausfall zu erkennen;
iii. eine Fernkommunikationseinheit (215), die konfiguriert ist, um eine momentane Standortkennung an die UTM-Station zu übertragen und nach Erkennung des kritischen Ausfalls ein luftfahrzeugspezifisches kritisches Ausfallalarmsignal (J) zu erzeugen und an die UTM-Station zu übertragen;
iv. einen Spannungssensor oder eine serielle Kommunikationseinheit (216) der Fernkommunikationseinheit (215) zum Bestimmen einer Spannung einer Batterie, die konfiguriert ist, um mindestens einen Auftriebsgenerator (289) des Luftfahrzeugs (150a-d) mit Strom zu versorgen; und
v. eine Aktivierungseinheit (220), die konfiguriert ist, um eine Fallschirmentfaltungsvorrichtung (10, 226) nach Erkennung des kritischen Ausfalls zu aktivieren,
wobei die Sicherheitsvorrichtung (180) unabhängig von den flugabhängigen Systemen betriebsbereit ist, von denen eines aufgrund des kritischen Ausfalls voraussichtlich eine Fehlfunktion aufweisen wird,
wobei die Sicherheitsvorrichtung ferner umfasst:
eine Aktivierungseinheit (220), die konfiguriert ist, um eine Auftriebsgeneratordeaktivierungseinheit (29, 221) und die Fallschirmentfaltungsvorrichtung (10, 226) nach Erkennung des kritischen Ausfalls zu aktivieren, um einen Sinkflugbetrieb entlang eines Sinkflugpfades (246) nach Beendigung des Fluges des ausgefallenen Luftfahrzeugs (150d) und dem Entfalten seines Fallschirms (20) einzuleiten; und
eine Notstromeinheit (207), die unabhängig von der Batterie ist und eingesetzt wird, wenn die Batteriespannung niedriger als ein vorbestimmter Wert ist,
wobei die Fernkommunikationseinheit (215) der Sicherheitsvorrichtung eine drahtlose Kommunikationsausrüstung (214) aufweist, um eine Datenverbindung mit der UTM-Station (240) herzustellen, wodurch ein verschlüsseltes Signal (E), das mit einer Kennung des ausgefallenen Luftfahrzeugs versehen ist, erzeugt und an die UTM-Station übertragen wird,
wobei die UTM-Station konfiguriert ist, um gleichzeitig ein Aktualisierungssignal (Ua-c) an alle benachbarten Luftfahrzeuge (150a-c) zu übertragen, für die vorhergesagt wird, dass sie den Sinkflugpfad (246) des ausgefallenen Luftfahrzeugs (150d) kreuzen oder sich in dessen Nähe befinden werden, wobei das Aktualisierungssignal eine luftfahrzeugspezifische aktualisierte Flugbahn angibt, die jedes der benachbarten Luftfahrzeuge veranlasst, seine Flugbahn dringend zu ändern, um eine Kollision mit dem ausgefallenen Luftfahrzeug zu vermeiden,
und wobei jeder Auftriebsgenerator (289) einen Rotor oder einen Propeller umfasst, und ein Motor oder ein Triebwerk, der bzw. das konfiguriert ist, um den Auftriebsgenerator (289) anzutreiben, als Antriebsmittel vorgesehen ist.

2. System nach Anspruch 1, wobei
die UTM-Station (240) zusätzlich konfiguriert ist, um Umstehende (259) vor einer Annäherung des ausgefallenen Luftfahrzeugs (150d) zu warnen; oder
die UTM-Station auch in Datenverbindung mit einer lokalen Mobilfunkbasisstation steht, die sich in Kommunikationsreichweite des Sinkflugpfades (246) des ausgefallenen Luftfahrzeugs befindet, und dadurch konfiguriert ist, um zu bestimmen, welches eine oder mehrere Mobiltelefone (248), die von entsprechenden Benutzern gehalten werden, sich in der Nähe des Sinkflugpfades des ausgefallenen Luftfahrzeugs befinden, und um ein Warnsignal (M) über ein Mobilfunknetz an das eine oder die mehreren Mobiltelefone zu übertragen, um den entsprechenden Benutzern zu ermöglichen, sofort Schutz zu suchen; oder
die UTM-Station auch in Datenverbindung mit einem Empfänger einer bodengestützten Sirene (257) steht, sodass von dieser sofort ein Warnton abgegeben wird, um Umstehenden, die sich in der Nähe des Sinkflugpfades (246) des ausgefallenen Luftfahrzeugs befinden, anzuzeigen, dass sie sofort ihren Standort signifikant ändern oder Schutz suchen müssen; oder
das ausgefallene Luftfahrzeug konfiguriert ist, um Umstehende vor einer Annäherung des ausgefallenen Luftfahrzeugs zu warnen.

3. System nach Anspruch 1, wobei die Sicherheitsvorrichtung (180) ferner eine Fehlererkennungseinheit (135) und eine Analyseeinheit (137) umfasst und die Verarbeitungseinheit (210) zusätzlich konfiguriert ist, um zusätzlich die Ausgänge von jedem der Bordsensoren (136a-j) zu verarbeiten, um eine Fluganomalie in dem Luftfahrzeug (150a-d) zu erkennen, in dem die Verarbeitungseinheit montiert ist, und um die Erzeugung einer weiteren luftfahrzeugspezifischen aktualisierten Flugbahn einzuleiten, die das Luftfahrzeug zwingt, zu einer spezifizierten Bodenstation (230) zu fliegen und sich einem Reparatur- oder Wartungsvorgang zu unterziehen, wobei eine Fluganomalie ein Fehler geringeren Grades als der kritische Fehler ist.

4. System nach Anspruch 1, wobei das ausgefallene Luftfahrzeug (150d) ein unbemanntes Starrflügelflugzeug ist, das konfiguriert ist, um nach der Deaktivierung jedes Auftriebsgenerators (289) durch die Auftriebsgeneratordeaktivierungseinheit (29) zu gleiten.

5. System nach Anspruch 4, wobei einer der Bordsensoren eine Trägheitsmesseinheit (IMU, Inertial Measurement Unit) ist, das eines oder mehrere von einem Beschleunigungsmesser, einem Gyroskop und einem Magnetometer aufweist, um eine aktuelle Ausrichtung in der Luft und eine Beschleunigung des UAV zu bestimmen, und ein Fallschirmentfaltungsvorgang nach Erkennung einer Beschleunigung des ausgefallenen Luftfahrzeugs, die größer als ein vorbestimmter Wert ist, welcher den Beginn eines freien Falls anstelle eines Gleitvorgangs anzeigt, automatisch einleitbar ist.

6. System nach Anspruch 1, das zum Durchführen eines intelligenten Landeverfahrens konfiguriert ist, wobei die Aktivierungseinheit (220) ferner einen intelligenten Landemechanismus (247) umfasst, der konfiguriert ist, um eine Notlandung unter der Führung einer Steuerung (244) für intelligentes Landen durchzuführen, wobei die Steuerung für intelligentes Landen betreibbar ist, um das Entfalten eines Airbags (249) zum Verringern des Aufpralls auf eine vorhandene Oberfläche während eines Notlandeverfahrens zu befehlen; oder das Luftfahrzeug eine Vielzahl von Tragflächen umfasst und eine sicherheitsgewährleistende Verarbeitungseinheit in Verbindung mit einem nach unten gerichteten Kollisionsvermeidungssystem betreibbar ist, um eine erforderliche Richtung der Abwärtsbewegung zu berechnen, um ein erkanntes Hindernis zu vermeiden, und um zu bewirken, dass eine ausreichende Anzahl der Tragflächen in Umfangsrichtung versetzt wird, um das sinkende Luftfahrzeug zu veranlassen, seine Sinkrichtung zu ändern, um das Hindernis zu vermeiden; oder das intelligente Landeverfahren die Verwendung von mindestens einem LiDAR-Sensor (136j) umfasst.

7. System nach Anspruch 3, wobei die Fluganomalie aus der Gruppe ausgewählt ist, die aus einem vorbestimmten Spannungsabfall der Batterie, die konfiguriert ist, um den mindestens einen Auftriebsgenerator (289) des Luftfahrzeugs (150a-d) mit Strom zu versorgen, und einem Verlust der flugabhängigen Kommunikation besteht.

8. System nach Anspruch 1, wobei jedes der Luftfahrzeuge (150a-d) zusätzlich umfasst:
einen Luftfahrzeugkörper, der mit dem mindestens einen Auftriebsgenerator (289) in Form eines Rotors konfiguriert ist;
Antriebsmittel, die konfiguriert sind, um den mindestens einen Rotor anzutreiben; eine Steuerung in elektrischer Verbindung mit einer Rotordeaktivierungseinheit (29, 221), die konfiguriert ist, um die Antriebsmittel zu deaktivieren;
die Fallschirmentfaltungsvorrichtung (10, 226), die mit einem nicht entfalteten Fallschirm (20) zusammenwirken kann, der in einer an dem Luftfahrzeugkörper befestigten Kammer (17, 122) gehalten wird; und
die Fehlererkennungseinheit (135).

9. System nach Anspruch 8, wobei die Fallschirmentfaltungsvorrichtung (10, 226) umfasst:
einen Verteiler (3, 33), der innerhalb eines Inneren der Kammer (17, 122) positioniert und an dieser befestigt ist, wobei mit dem Verteiler ein einzelner Behälter (47, 87) lösbar gekoppelt ist, in dem unter Druck stehendes Gas (G) erzeugt wird;
einen Gasgenerator (49, 81), der mit dem Behälter zusammenwirkt;
eine Vielzahl von hohlen Rohren (8), die sich schräg und nach oben von dem Verteiler erstrecken und mit diesem in Fluidverbindung stehen; und
eine Vielzahl von Projektilen (13), von denen jedes mit einem Stab (11) gebildet ist, der in einem entsprechenden der Rohre aufnehmbar ist, und mit denen jeweils eine Leine verbunden ist, die auch mit einem entsprechenden Abschnitt des nicht entfalteten Fallschirms (20) verbunden ist,
wobei das unter Druck stehende Gas, das beim Auslösen des Gasgenerators erzeugt wird, durch jedes der Rohre strömen kann, um die Vielzahl von Projektilen in verschiedene Richtungen zu treiben und zu bewirken, dass der Fallschirm entfaltet wird,
wobei die Fallschirmentfaltungsvorrichtung konfiguriert ist, um zu bewirken, dass der Fallschirm gleichzeitig mit dem Ausstoß des Fallschirms aus der Kammer einen gewünschten Fallschirmkappendurchmesser erreicht.

## Revendications

1. Système de prévention des dommages basé sur véhicule aérien (200) pouvant fonctionner pendant le début d'un événement de défaillance critique impliquant un véhicule aérien, comprenant :
a) une pluralité de véhicules aériens (150a-d), chacun volant le long d'une trajectoire de vol unique et comprenant une pluralité de systèmes dépendants du vol ; et
b) une station de système de gestion du trafic aérien sans pilote (UTM) (240) en communication de données avec ladite pluralité de véhicules aériens et configurée pour allouer un espace aérien à basse altitude (251-253) à chacun de ladite pluralité de véhicules aériens et pour accorder ainsi l'autorisation de voler le long de la trajectoire de vol unique,
dans lequel chacun desdits véhicules aériens comprend un appareil de sécurité (180) pour identifier une défaillance critique irréversible de véhicule aérien qui présente un risque d'être catastrophique et de mettre en danger les véhicules aériens et les personnes au sol à proximité, ledit appareil de sécurité comprenant :
i. un ou plusieurs capteurs embarqués (136a-j) comprenant un détecteur de localisation, lesquels sont configurés pour détecter les caractéristiques liées au vol ;
ii. une unité de traitement (210) configurée pour traiter les sorties de chacun des capteurs embarqués et pour détecter la défaillance critique ;
iii. une unité de communication à distance (215) configurée pour transmettre un identifiant de localisation instantané à ladite station UTM et pour générer et transmettre un signal d'alarme de défaillance critique spécifique de véhicule aérien (J) à ladite station UTM suite à la détection de la défaillance critique ;
iv. un capteur de tension ou une unité de communication série (216) de ladite unité de communication à distance (215) pour déterminer une tension d'une batterie configurée pour alimenter au moins un générateur de portance (289) du véhicule aérien (150a-d) ; et
v. une unité d'activation (220) configurée pour activer un appareil de déploiement de parachute (10, 226) suite à la détection de la défaillance critique,
dans lequel ledit appareil de sécurité (180) est opérationnel indépendamment desdits systèmes dépendants du vol dont l'un est susceptible di subir un dysfonctionnement en raison de la défaillance critique,
dans lequel ledit appareil de sécurité comprend en outre :
une unité d'activation (220) configurée pour activer une unité de désactivation de générateur de portance (29, 221) et l'appareil de déploiement de parachute (10, 226) après la détection de la défaillance critique, pour lancer une opération de descente le long d'une trajectoire de descente (246) après l'interruption du vol du véhicule aérien défaillant (150d) et le déploiement de son parachute (20) ; et
une unité d'alimentation de secours (207) indépendante de la batterie et utilisée lorsque la tension de batterie est inférieure à une valeur prédéterminée,
dans lequel l'unité de communication à distance (215) dudit appareil de sécurité a un équipement de communication sans fil (214) pour établir une liaison de données avec ladite station UTM (240) par laquelle un signal chiffré (E) comportant un identifiant du véhicule aérien défaillant est généré et transmis à ladite station UTM,
dans lequel ladite station UTM est configurée pour transmettre simultanément un signal de mise à jour (Ua-c) à tous les véhicules aériens voisins (150a-c) qui devraient traverser, ou être à proximité, de la trajectoire de descente (246) du véhicule aérien défaillant (150d), ledit signal de mise à jour étant indicatif d'une trajectoire de vol mise à jour spécifique de véhicule aérien qui amène chacun desdits véhicules aériens voisins à changer d'urgence sa trajectoire de vol pour éviter une collision avec le véhicule aérien défaillant,
et dans lequel chaque générateur de portance (289) comprend un rotor ou une hélice, et un moteur configuré pour entraîner le générateur de portance (289) est prévu comme moyen d'entraînement.

2. Système selon la revendication 1, dans lequel
la station UTM (240) est en outre configurée pour alerter les personnes au sol (259) d'une approche du véhicule aérien défaillant (150d) ; ou
la station UTM est également en communication de données avec une station de base cellulaire locale qui est dans la portée de communication de la trajectoire de descente (246) du véhicule aérien défaillant, et elle est ainsi configurée pour déterminer quels téléphones mobiles (248) détenus par les utilisateurs correspondants sont situés à proximité de la trajectoire de descente du véhicule aérien défaillant et pour transmettre un signal d'alerte (M) à un ou plusieurs téléphones mobiles sur un réseau cellulaire pour permettre aux utilisateurs correspondants de trouver un abri immédiat ; ou
la station UTM est également en communication de données avec un récepteur d'une sirène au sol (257), de sorte qu'un son d'avertissement sera immédiatement émis par celle-ci, pour indiquer aux personnes au sol situés à proximité de la trajectoire de descente (246) du véhicule aérien défaillant qu'ils doivent immédiatement changer de manière significative leur emplacement ou chercher refuge ; ou
le véhicule aérien défaillant est configuré pour alerter les personnes au sol d'une approche du véhicule aérien défaillant.

3. Système selon la revendication 1, dans lequel l'appareil de sécurité (180) comprend en outre une unité de détection de défaillance (135) et une unité d'analyse (137), et l'unité de traitement (210) est en outre configurée pour traiter en outre les sorties de chacun des capteurs embarqués (136a-j), pour détecter une anomalie de vol dans le véhicule aérien (150a-d) dans lequel l'unité de traitement est montée, et pour initier la génération d'une autre trajectoire de vol mise à jour spécifique de véhicule aérien qui force le véhicule aérien à voler vers une station au sol spécifiée (230) et à subir une opération de réparation ou de maintenance, une anomalie de vol étant une défaillance d'un degré inférieur à la défaillance critique.

4. Système selon la revendication 1, dans lequel le véhicule aérien défaillant (150d) est un avion à voilure fixe sans pilote qui est configuré pour planer après la désactivation de chaque générateur de portance (289) par l'unité de désactivation de générateur de portance (29).

5. Système selon la revendication 4, dans lequel l'un des capteurs embarqués est une unité de mesure inertielle (IMU) ayant un ou plusieurs parmi un accéléromètre, un gyroscope et un magnétomètre pour déterminer une orientation et une accélération en vol actuelles de l'UAV et une opération de déploiement de parachute est automatiquement initiable suite à la détection d'une accélération de véhicule aérien défaillant qui est supérieure à une valeur prédéterminée qui est indicative du début d'une chute libre plutôt que d'une opération de vol plané.

6. Système selon la revendication 1, configuré pour effectuer une procédure d'atterrissage intelligent, dans lequel l'unité d'activation (220) comprend en outre un mécanisme d'atterrissage intelligent (247) configuré pour effectuer un atterrissage d'urgence sous la direction d'un contrôleur d'atterrissage intelligent (244), dans lequel le contrôleur d'atterrissage intelligent peut fonctionner pour commander le déploiement d'un airbag (249) pour réduire l'impact avec une surface existante pendant une procédure d'atterrissage d'urgence ; ou
le véhicule aérien comprend une pluralité de surfaces portantes et une unité de traitement de garantie de sécurité peut fonctionner conjointement avec un système d'évitement de collision orienté vers le bas, pour calculer une direction requise de déplacement vers le bas afin d'éviter un obstacle détecté et d'amener un nombre suffisant des surfaces portantes à se déplacer de manière circonférentielle, pour amener le véhicule aérien en descente à changer sa direction de descente afin d'éviter l'obstacle ;
ou la procédure d'atterrissage intelligent comprend l'utilisation d'au moins un capteur LiDAR (136j).

7. Système selon la revendication 3, dans lequel l'anomalie de vol est sélectionnée dans le groupe constitué d'une chute prédéterminée de tension de la batterie configurée pour alimenter l'au moins un générateur de portance (289) du véhicule aérien (150a-d) et d'une perte de communication dépendante du vol.

8. Système selon la revendication 1, dans lequel chacun des véhicules aériens (150a-d) comprend en outre :
un corps de véhicule aérien configuré avec l'au moins un générateur de portance (289) sous la forme d'un rotor ;
des moyens d'entraînement configurés pour entraîner l'au moins un rotor ;
un contrôleur en communication électrique avec une unité de désactivation de rotor (29, 221) configurée pour désactiver les moyens d'entraînement;
l'appareil de déploiement de parachute (10, 226) pouvant interagir avec un parachute non déployé (20) qui est retenu dans une chambre (17, 122) fixée audit corps de véhicule aérien ; et
l'unité de détection de défaillance (135).

9. Système selon la revendication 8, dans lequel l'appareil de déploiement de parachute (10, 226) comprend :
un collecteur (3, 33) positionné à l'intérieur de la chambre (17, 122) et fixé à celle-ci, ledit collecteur étant couplé de manière amovible à un seul récipient (47, 87) à l'intérieur duquel du gaz sous pression (G) est généré ;
un générateur de gaz (49, 81) qui coopère avec ledit récipient ;
une pluralité de tubes creux (8) qui s'étendent obliquement et vers le haut à partir dudit collecteur et sont en communication fluidique avec celui-ci ; et
une pluralité de projectiles (13), dont chacun est formé avec une tige (11) pouvant être reçue dans l'un correspondant desdits tubes et à chacun desquels est relié un cordon qui est également relié à une partie correspondante du parachute non déployé (20),
dans lequel le gaz sous pression qui est généré lors du déclenchement dudit générateur de gaz peut s'écouler à travers chacun desdits tubes pour propulser ladite pluralité de projectiles dans différentes directions et pour provoquer le déploiement du parachute,
dans lequel l'appareil de déploiement de parachute est configuré pour amener le parachute à atteindre un diamètre de voilure souhaité simultanément à l'éjection du parachute hors de la chambre.
